# EUROPEAN PATENT APPLICATION

(11) **EP 4 761 157 A1**
(43) Date of publication of application: **17.06.2026**
(21) Application number: 23947977.7
(22) Date of filing: 08.08.2023
(51) Int. Cl.: H04L 5/00, H04W 72/21, H04W 72/23, H04W 72/542

(54) **INFORMATION PROCESSING METHOD, AND COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: XIONG, Yi, Beijing 100085 (CN)
(74) Representative: Dehns Germany Partnerschaft mbB
(86) International application number: PCT/CN2023/111847
(87) International publication number: WO 2025/030400

(57) **Abstract**

Provided in the embodiments of the present disclosure are an information processing method, a communication device, a communication system and a storage medium. The method comprises: a first node sending indication information to a second node, wherein the indication information is used for the second node to configure an execution condition for executing a mobility operation, the first node is associated with a primary cell of a terminal, and the second node is associated with one or more candidate primary secondary cells of the terminal. In the technical solution provided in the embodiments of the present disclosure, a first node sends indication information to a second node, such that the first node informs the second node of one or more candidate primary secondary cells of a terminal, and thus on the basis of the one or more primary secondary cells of the terminal, the second node configures the terminal with an execution condition for executing a mobility operation, thereby reducing the phenomena that the access to the candidate primary secondary cells of the terminal fails, and/or reducing the situations in which the communication quality is poor after the access.

## Description

### TECHNICAL FIELD

The disclosure relates to the field of communication technology, specifically to a method for processing information, a communication device, a communication system, and a storage medium.

### BACKGROUND

To address problems such as data rate fluctuation, signaling overhead and latency caused by frequent handovers of terminals, the 5th generation mobile communication technology (5G) introduced various mobility enhancement technologies, including for example conditional handover (CHO) and conditional primary and secondary cell addition/change (CPAC).

### SUMMARY

A candidate secondary node (C-SN) cannot accurately obtain a candidate primary and secondary cell (PSCell) of a terminal, and thus cannot configure an execution condition for the terminal to perform a mobility operation.

Embodiments of the disclosure provide a method for processing information, a communication device, a communication system, and a storage medium.

According to a first aspect of the embodiments of the disclosure, a method for processing information is provided, including:
sending, by a first node, indication information to a second node, in which the indication information is configured for the second node to configure an execution condition for executing a mobility operation,
in which the first node is associated with a primary cell (PCell) of a terminal, and the second node is associated with one or more candidate PSCells of the terminal.

According to a second aspect of the embodiments of the disclosure, a method for processing information is provided, including:
receiving, by a second node, indication information sent by a first node, in which the indication information is configured for the second node to configure an execution condition for executing a mobility operation,
in which the first node is associated with a PCell of a terminal, and the second node is associated with one or more candidate PSCells of the terminal.

According to a third aspect of the embodiments of the disclosure, a method for processing information is provided, including:
a first node sending indication information to a second node, in which the indication information is configured for the second node to configure an execution condition for executing a mobility operation,
in which the first node is associated with a PCell of a terminal, and the second node is associated with one or more candidate PSCells of the terminal.

According to a fourth aspect of the embodiments of the disclosure, a first network device is provided, including:
a sending module configured to send indication information to a second node, in which the indication information is configured for the second node to configure an execution condition for executing a mobility operation, in which the first node is associated with a PCell of a terminal, and the second node is associated with one or more candidate PSCells of the terminal.

According to a fifth aspect of the embodiments of the disclosure, a second network device is provided, including:
a receiving module configured to receive indication information sent by a first node, in which the indication information is configured for a second node to configure an execution condition for executing a mobility operation, in which the first node is associated with a PCell of a terminal, and the second node is associated with one or more candidate PSCells of the terminal.

According to a sixth aspect of the embodiments of the disclosure, a communication system is provided, including: a first network device and a second network device, in which the first network device is configured to implement the method for processing information in the first aspect, and the second network device is configured to implement the method for processing information in the second aspect.

According to a seventh aspect of the embodiments of the disclosure, a communication device is provided, including:
one or more processors;
in which the one or more processors are configured to invoke instructions to cause the communication device to execute the method for processing information in the first aspect or the second aspect.

According to an eighth aspect of the embodiments of the disclosure, a storage medium is provided. The storage medium stores instructions that, when run on a communication device, cause the communication device to execute the method for processing information in the first aspect or the second aspect.

According to the technical solutions provided by the embodiments of the disclosure, the first node sends the indication information to the second node, so that the first node notifies the second node of one or more candidate PSCells of the terminal, which enable the second node to configure, based on one or more PSCells of the terminal, an appropriate or operable execution condition for the terminal to perform the mobility operation, thereby reducing a phenomenon of access failure of a candidate PSCell of the terminal and/or a situation of poor communication quality after access.

It should be understood that the foregoing general description and the following detailed description are merely exemplary and explanatory, and shall not constitute a limitation to the embodiments of the disclosure.

### BRIEF DESCRIPTION OF THE DRAWINGS

The accompanying drawings are incorporated in and constitute a part of this specification, which illustrate embodiments consistent with the present invention and, together with the specification, serve to explain the principles of the embodiments of the present invention.
FIG. 1a is a schematic diagram of a communication system according to an embodiment.
FIG. 1b is an architecture schematic diagram of an evolved universal terrestrial radio access new radio (E-UTRA-NR)-dual connectivity (EN-DC).
FIG. 1c is an architecture schematic diagram of an NR-DC.
FIG. 1d is a schematic diagram of a master cell group (MCG) and a secondary cell group (SCG).
FIG. 1e is a schematic flowchart of a master node (MN)-initiated conditional primary and secondary cells change (CPC) according to an embodiment of the disclosure.
FIG. 1f is a schematic flowchart of a secondary node (SN)-initiated conditional CPC according to an embodiment of the disclosure.
FIG. 2a is a schematic flowchart of a method for processing information according to an embodiment.
FIG. 2b is a schematic flowchart of a method for processing information according to an embodiment.
FIG. 2c is a schematic flowchart of a method for processing information according to an embodiment.
FIG. 2d is a schematic flowchart of a method for processing information according to an embodiment.
FIG. 3a is a schematic flowchart of a method for processing information according to an embodiment.
FIG. 3b is a schematic flowchart of a method for processing information according to an embodiment.
FIG. 3c is a schematic flowchart of a method for processing information according to an embodiment.
FIG. 3d is a schematic flowchart of a method for processing information according to an embodiment.
FIG. 3e is a schematic flowchart of a method for processing information according to an embodiment.
FIG. 4a is a schematic flowchart of a method for processing information according to an embodiment.
FIG. 4b is a schematic flowchart of a method for processing information according to an embodiment.
FIG. 4c is a schematic flowchart of a method for processing information according to an embodiment.
FIG. 4d is a schematic flowchart of a method for processing information according to an embodiment.
FIG. 4e is a schematic flowchart of a method for processing information according to an embodiment.
FIG. 5 is a schematic flowchart of a method for processing information according to an embodiment.
FIG. 6a is a schematic flowchart of an MN-initiated conditional primary and secondary cell addition/change (CPAC) according to an embodiment.
FIG. 6b is a schematic flowchart of an SN-initiated CPAC according to an embodiment.
FIG. 6c is a schematic flowchart of an MN-initiated CPAC according to an embodiment.
FIG. 6d is a schematic flowchart of an SN-initiated CPAC according to an embodiment.
FIG. 7a is a schematic diagram of a first network device according to an embodiment.
FIG. 7b is a schematic diagram of a second network device according to an embodiment.
FIG. 8a is a schematic diagram of a user equipment (UE) according to an embodiment.
FIG. 8b is a schematic diagram of a communication device according to an embodiment.

### DETAILED DESCRIPTION

Embodiments of the disclosure provide a method for processing information, an apparatus, a communication device, a communication system, and a storage medium.

According to a first aspect of the embodiments of the disclosure, a method for processing information is provided, which includes:
sending, by a first node, indication information to a second node, in which the indication information is configured for the second node to configure an execution condition for executing a mobility operation,
in which the first node is associated with a primary cell (PCell) of a terminal, and the second node is associated with one or more candidate primary and secondary cells (PSCells) of the terminal.

In the above embodiments, the first node sends the indication information to the second node, so that the first node notifies the second node of one or more candidate PSCells of the terminal, which facilitates the second node to configure the execution condition for the terminal to execute the mobility operation based on one or more PSCells of the terminal, thereby reducing a phenomenon of access failure of a candidate PSCell of the terminal and/or a situation of poor communication quality after access.

In combination with some embodiments of the first aspect, in some embodiments, the indication information includes at least one of:
first information indicating a first candidate PSCell set, in which the first candidate PSCell set includes one or more candidate PSCells prepared to be configured for the terminal; or
second information indicating a second candidate PSCell set, in which the second candidate PSCell set includes one or more candidate PSCells having been determined to be configured for the terminal.

In the above embodiments, the first node sends the first information and/or the second information to the second node, providing two optional types of information to inform the second node of the one or more candidate PSCells for the terminal, thus facilitating a flexible selection of configuration as needed. For example, the first information indicating the first candidate PSCell set enables the second node to configure the corresponding execution condition based on the one or more candidate PSCells prepared to be configured for the terminal, so that the execution condition configured by the second node for executing the mobility operation may meet a requirement of a network side. Alternatively, the second information indicating the second candidate PSCell set enables the second node to configure the corresponding execution condition based on the one or more candidate PSCells having been determined to be configured for the terminal, so that the execution condition configured by the second node for executing the mobility operation has a higher applicability.

In combination with some embodiments of the first aspect, in some embodiments, the indication information includes at least one of:
third information indicating a third candidate PSCell set, in which the third candidate PSCell set includes one or more candidate PSCells currently having been determined to be configured for the terminal; or
fourth information indicating a fourth candidate PSCell set, in which the fourth candidate PSCell set includes one or more candidate PSCells having been determined to be additionally configured for the terminal.

In the above embodiments, the first node sends the third information and the fourth information to the second node, enabling an updated candidate secondary node (C-SN) and/or an updated candidate PSCell to be timely notified to the second node in case that there are changes in the C-SN of the terminal and the candidate PSCell determined to be configured by the C-SN, which allows the second node to configure a more accurate execution condition for executing the mobility operation, thereby reducing the phenomenon of access failure of the candidate PSCell of the terminal and/or the situation of poor communication quality after access.

In combination with some embodiments of the first aspect, in some embodiments, the indication information includes at least one of:
fifth information indicating a first candidate PSCell set, in which the first candidate PSCell set includes one or more candidate PSCells prepared to be configured for the terminal; or
sixth information indicating difference information between the first candidate PSCell set and a second candidate PSCell set, in which the second candidate PSCell set includes one or more candidate PSCells having been determined to be configured for the terminal.

In the above embodiments, the first node sends the fifth information and the sixth information to the second node, enabling the difference information between the one or more candidate PSCells having been determined to be configured and the one or more candidate PSCells prepared to be configured to be timely notified to the second node in case that the one or more candidate PSCells determined to be configured by the C-SN are different from the one or more candidate PSCells prepared to be configured for the terminal by a network device, which allows the second node to update the execution condition for the terminal to execute the mobility operation and/or a measurement configuration of one or more candidate PSCells configured by the second node, thereby reducing the phenomenon of access failure of the candidate PSCell of the terminal and/or the situation of poor communication quality after access.

In combination with some embodiments of the first aspect, in some embodiments, the first candidate PSCell set includes at least one of:
all candidate PSCells prepared to be configured for the terminal; or
one or more candidate PSCells associated with a third node and prepared to be configured for the terminal, in which the third node is different from the second node.

In the above embodiments, the first candidate PSCell set may include all the candidate PSCells prepared to be configured for the terminal and/or the candidate PSCells associated with the third node and prepared to be configured for the terminal, thereby facilitating the second node to configure the execution condition for executing the mobility operation based on one or more candidate PSCells prepared to be configured in the first candidate PSCell set, so as to enable the second node to configure the corresponding execution condition for all the candidate PSCells that the network device is prepared to configure for the terminal.

In combination with some embodiments of the first aspect, in some embodiments, the second candidate PSCell set includes at least one of:
all candidate PSCells having been determined to be configured for the terminal; or
one or more candidate PSCells associated with a third node and having been determined to be configured for the terminal, in which the third node is different from the second node.

In the above embodiments, the second candidate PSCell set may include all the candidate PSCells having been determined to be configured for the terminal and/or the candidate PSCells associated with the third node and having been determined to be configured for the terminal, thereby facilitating the second node to reduce a configuration of the execution condition corresponding to an unnecessary candidate PSCell on the basis of one or more candidate PSCells having been determined to be configured in the second candidate PSCell set.

In combination with some embodiments of the first aspect, in some embodiments, the indication information includes at least one of:
cell identity information of the one or more candidate PSCells;
a node identifier (ID) of a node associated with the one or more candidate PSCells;
cell measurement result information of the one or more candidate PSCells; or
cell frequency point information of the one or more candidate PSCells.

In the above embodiments, by carrying the cell identity information, the cell measurement result information, the cell frequency point information of the one or more candidate PSCells and/or the node ID of the nodes node associated with the one or more candidate PSCells in the indication information, the second node is facilitated to determine the one or more candidate PSCells and configure the corresponding execution condition for the mobility operation based on the one or more candidate PSCells.

In combination with some embodiments of the first aspect, in some embodiments, sending, by the first node, the indication information to the second node includes:
sending, by the first node, a first message containing the first information to the second node, in which the first message is configured for an SN addition for the terminal;
   or
sending, by the first node, a second message containing the second information to the second node, in which the second message is configured for an SN modification for the terminal.

In the above embodiments, the first node may directly reuse the first message applicable to an SN addition for the terminal to send the first information to the second node, or directly reuse the second message applicable to the SN modification for the terminal to send the second information to the second node. On the one hand, the second node is enabled to configure the corresponding execution condition for the mobility operation for one or more candidate PSCells of the terminal according to the first candidate PSCell set indicated by the first information or the second candidate PSCells indicated by the second information. On the other hand, a signaling overhead may be reduced.

In combination with some embodiments of the first aspect, in some embodiments, sending, by the first node, the indication information to the second node includes:
sending, by the first node, a first message containing the third information to the second node, in which the first message is configured for an SN addition for the terminal; and
sending, by the first node, a second message containing the fourth information to the second node, in which the second message is configured for an SN modification for the terminal.

In the above embodiments, the first node may directly reuse the first message applicable to the SN addition for the terminal to send the third information to the second node, and in a case where the one or more candidate PSCells determined to be configured by the C-SN are different from the one or more candidate PSCells prepared to be configured for the terminal by the network device, directly reuse the second message applicable to the SN modification for the terminal to send the fourth information to the second node. On the one hand, this may timely notify the second node of an updated C-SN and/or an updated candidate PSCell, facilitating the second node to configure the corresponding execution condition for the mobility operation for the one or more candidate PSCells of the terminal. On the other hand, the signaling overhead may be reduced.

In combination with some embodiments of the first aspect, in some embodiments, sending, by the first node, the indication information to the second node includes:
sending, by the first node, a first message containing the fifth information to the second node, in which the first message is configured for an SN addition for the terminal; and
sending, by the first node, a second message containing the sixth information to the second node, in which the second message is configured for an SN modification for the terminal.

In the above embodiments, the first node may directly reuse the first message applicable to the SN addition for the terminal to send the fifth information to the second node, and in a case in which there are changes in the C-SN of the terminal and/or the candidate PSCell determined to be configured by the C-SN, directly reuse the second message applicable to the SN modification for the terminal to send the sixth information to the second node. On the one hand, this may timely notify the second node of the difference information between the one or more candidate PSCells having been determined to be configured and the one or more candidate PSCells prepared to be configured, facilitating the second node to configure the corresponding execution condition for the mobility operation for the one or more candidate PSCells of the terminal. On the other hand, the signaling overhead may be reduced.

In combination with some embodiments of the first aspect, in some embodiments, both the first message and the second message are Xn messages.

In the above embodiments, the first node may directly send the first message and the second message to the second node via an Xn interface between the first node and the second node, so as to inform the second node of the one or more candidate PSCells of the terminal and facilitate the second node to configure the corresponding execution condition for the mobility operation for the one or more candidate PSCells of the terminal.

**In** combination with some embodiments of the first aspect, in some embodiments, the Xn message includes an inter-node radio resource control (RRC) message container, and the indication information is carried in the inter-node RRC message container.

In the above embodiments, the first node may carry the indication information in the inter-node RRC message container within the Xn message, so as to directly reuse an existing message container of the Xn message for sending the indication information, thereby reducing modifications to a format of the Xn message.

In combination with some embodiments of the first aspect, in some embodiments, the inter-node RRC message container includes cell group configuration information (CG-ConfigInfo).

In the above embodiments, the first node may carry the indication information in a CG-ConfigInfo message container within the Xn message, so as to directly reuse the existing message container of the Xn message for sending the indication information, thereby reducing modifications to the format of the Xn message.

In combination with some embodiments of the first aspect, in some embodiments, the indication information includes seventh information indicating at least one of:
a mobility operation having been configured for the terminal; or
a mobility operation prepared to be configured for the terminal.

In the above embodiments, the indication information may further include the seventh information, which is used to indicate a configuration status of the mobility operation, so that the second node may obtain relevant information about the corresponding mobility operation based on the seventh information.

In combination with some embodiments of the first aspect, in some embodiments, the mobility operation includes at least one of:
a mobility operation initiated by the first node; or
a mobility operation initiated by a fourth node.

In the above embodiments, the first node may automatically initiate the mobility operation of the terminal, or the mobility operation of the terminal may be initiated by the fourth node, thereby enhancing a flexibility in initiating the mobility operation.

In combination with some embodiments of the first aspect, in some embodiments, sending, by the first node, the indication information to the second node includes one of:
in response to the first node initiating an addition operation of the second node or a modification operation of the second node, sending, by the first node, the indication information to the second node; and
in response to the first node receiving a third message indicating that a fourth node initiates an addition operation of the second node or a modification operation of the second node, sending, by the first node, the indication information to the second node.

In the above embodiments, the first node may initiate the addition operation or the modification operation of the second node by itself and send the indication information to the second node, so as to inform the second node of the one or more candidate PSCells of the terminal. Alternatively, the first node may send the indication information to the second node in response to the first node receiving the third message initiated that the fourth node initiates the addition operation or the modification operation of the second node, so as to inform the second node of the one or more candidate PSCells of the terminal.

In combination with some embodiments of the first aspect, in some embodiments, in a case where the first node initiates the addition operation of the second node or the modification operation of the second node, the first candidate PSCell set is determined by the first node;
or
the first candidate PSCell set is determined by the third message.

In the above embodiments, in a case where the first node initiates the addition operation or the modification operation of the second node by itself, the first node may determine by itself the one or more candidate PSCells prepared to be configured for the terminal. Alternatively, in a case where the fourth node initiates the addition operation or the modification operation of the second node, the fourth node may determine by itself the one or more candidate PSCells prepared to be configured for the terminal and inform the first node via the third message, so that the first node may inform the second node of the first candidate PSCell set via the indication information.

In combination with some embodiments of the first aspect, in some embodiments, the method further includes:
receiving, by the first node, an acknowledge message sent by the second node, in which the acknowledge message is configured to determine the execution condition of the mobility operation and/or a measurement configuration of one or more candidate PSCells configured by the second node.

In the above embodiments, the first node may receive the acknowledge message from the second node to determine, based on the acknowledge message, the execution condition for the mobility operation and/or the measurement configuration of the one or more candidate PSCells configured by the second node, so as to send the execution condition and/or the measurement configuration to the terminal and assist the terminal in executing the mobility operation.

In combination with some embodiments of the first aspect, in some embodiments, the acknowledge message includes at least one of:
the execution condition of the mobility operation; or
an event type and/or a parameter value corresponding to the execution condition of the mobility operation, in which the event type and/or the parameter value corresponding to the execution condition are configured for the first node and/or a fourth node to generate the execution condition of the mobility operation.

In the above embodiments, the acknowledge message may carry the execution condition for the mobility operation generated by the second node, so that the first node may directly send the execution condition to the terminal to complete a configuration of the mobility operation for the terminal. Alternatively, the acknowledge message may carry the event type and/or the parameter value corresponding to the execution condition for the mobility operation, so that the network device may generate the execution condition for the mobility operation based on the event type and/or the parameter value, and send the execution condition to the terminal to complete the configuration of the mobility operation for the terminal.

In combination with some embodiments of the first aspect, in some embodiments, the measurement configuration is associated with a measurement configuration of a master node (MN) and/or a measurement configuration of an SN,
the MN includes a source MN and/or a current MN, and
the SN includes a source SN (S-SN) and/or a C-SN.

In the above embodiments, the measurement configuration of the one or more candidate PSCells configured by the second node may refer to the measurement configuration of the source MN and/or the current MN, or refer to the measurement configuration of the S-SN and/or the C-SN, so that the terminal may perform a measurement on the one or more candidate PSCells according to the above measurement configuration and determine whether to perform the mobility operation.

In combination with some embodiments of the first aspect, in some embodiments, the parameter value includes at least one of:
an offset;
a threshold value;
a trigger time; or
a hysteresis value.

In the above embodiments, the first node may determine a conditional event corresponding to the mobility operation based on the event type of the conditional event carried in the acknowledge message as well as the offset, the threshold value, the trigger time and/or the hysteresis value corresponding to this type of event, so as to generate the execution condition for executing the mobility operation.

In combination with some embodiments of the first aspect, in some embodiments, the mobility operation includes at least one of:
a conditional PSCell addition (CPA) operation; or
a conditional PSCell change (CPC) operation.

In the above embodiments, in the case where the first node or the fourth node initiates the CPA operation and/or the CPC operation, the first node sends the indication information to the second node to inform the second node of the one or more candidate PSCells of the terminal, so that the second node may configure the corresponding execution condition. Thereby, the terminal may determine a target PSCell to be added or changed according to whether a measurement result of each candidate PSCell meets the corresponding execution condition, so as to perform the CPA operation and/or the CPC operation.

According to a second aspect of the embodiments of the disclosure, a method for processing information is provided, which includes:
receiving, by a second node, indication information sent by a first node, in which the indication information is configured for the second node to configure an execution condition for executing a mobility operation,
in which the first node is associated with a primary cell (PCell) of a terminal, and the second node is associated with one or more candidate PSCells of the terminal.

In the above embodiments, the second node receives the indication information sent by the first node, determines one or more candidate PSCells of the terminal according to the indication information, and then configures the execution condition for executing the mobility operation for the terminal based on one or more PSCells of the terminal, thereby reducing the phenomenon of access failure of the candidate PSCell of the terminal and/or the situation of poor communication quality after access.

According to a third aspect of the embodiments of the disclosure, a method for processing information is provided, which includes:
a first node sending indication information to a second node, in which the indication information is configured for the second node to configure an execution condition for executing a mobility operation,
in which the first node is associated with a primary cell (PCell) of a terminal, and the second node is associated with one or more candidate PSCells of the terminal.

According to a fourth aspect of the embodiments of the disclosure, a first network device is provided, including:
a sending module configured to send indication information to a second node, in which the indication information is configured for the second node to configure an execution condition for executing a mobility operation, in which the first node is associated with a PCell of a terminal, and the second node is associated with one or more candidate PSCells of the terminal.

According to a fifth aspect of the embodiments of the disclosure, a second network device is provided, including:
a receiving module configured to receive indication information sent by a first node, in which the indication information is configured for a second node to configure an execution condition for executing a mobility operation, in which the first node is associated with a PCell of a terminal, and the second node is associated with one or more candidate PSCells of the terminal.

According to a sixth aspect of the embodiments of the disclosure, a communication system is provided, including: a first network device and a second network device, in which the first network device is configured to implement the method for processing information in the optional implementations of the first aspect, and the second network device is configured to implement the method for processing information in the optional implementations the second aspect.

According to a seventh aspect of the embodiments of the disclosure, a communication device is provided, including:
one or more processors;
in which the one or more processors are configured to invoke instructions to cause the communication device to execute the method for processing information in the optional implementations of the first aspect or the second aspect.

According to an eighth aspect of the embodiments of the disclosure, a storage medium is provided. The storage medium stores instructions that, when run on a communication device, cause the communication device to execute the method for processing information in the optional implementations of the first aspect or the second aspect.

According to a ninth aspect of the embodiments of the disclosure, a program product is provided, which, when executed by a communication device, causes the communication device to execute the method for processing information in the optional implementations of the first aspect or the second aspect.

According to a tenth aspect of the embodiments of the disclosure, a computer program is provided, which, when run on a computer, causes the computer to execute the method for processing information in the optional implementations of the first aspect or the second aspect.

It may be understood that the aforementioned first network device, second network device, communication device, communication system, storage medium, program product, and computer program are all configured to execute the methods provided by the embodiments of the disclosure. Therefore, reference may be made to the beneficial effects in the corresponding methods for the beneficial effects that may be achieved thereby, which are not repeated herein.

The embodiments of the disclosure provide a method for processing information, a communication device, a communication system, and a storage medium. In some embodiments, the terms such as "method for processing information", "information indication method", and "information transmission method" may be used interchangeably; the terms such as "information indication apparatus", "information processing apparatus", and "information transmission apparatus" may be used interchangeably; and the terms such as "communication system" and "information processing system" may be used interchangeably.

The embodiments of the disclosure are not exhaustive but merely illustrative of some embodiments, and shall not serve as specific limitations on the protection scope of the disclosure. Without conflict, each step in a certain embodiment may be implemented as an independent embodiment, and the steps may be combined arbitrarily. For example, the solution after removing some steps in a certain embodiment may also be implemented as an independent embodiment, and the order of the steps in a certain embodiment may be swapped arbitrarily. In addition, optional implementations in a certain embodiment may be combined arbitrarily; furthermore, the embodiments may be combined arbitrarily. For example, some or all steps of different embodiments may be combined arbitrarily, and a certain embodiment may be combined arbitrarily with optional implementations of other embodiments.

In each embodiment of the disclosure, unless otherwise specified and without logical conflict, the terms and/or descriptions between the embodiments are consistent and may be cross-referenced. Technical features in different embodiments may be combined to form new embodiments according to their inherent logical relationships.

The terms used in the embodiments of the disclosure are merely for the purpose of describing specific embodiments and are not intended to limit the disclosure.

In the embodiments of the disclosure, unless otherwise stated, elements expressed in the singular form, such as "a", "an", "the", "said", "aforesaid", and "this", may mean "one and only one", or "one or more", "at least one", etc. For example, when articles such as "a", "an", and "the" in English are used in translation, the noun following the article may be understood as a singular form or a plural form.

In the embodiments of the disclosure, "a plurality of" refers to two or more.

In some embodiments, terms such as "at least one (of)", "one or more", "a plurality of", and "multiple" may be used interchangeably.

In some embodiments, recording methods such as "at least one of A and B", "A and/or B", "A in one case and B in another case", and "one case A and another case B" may include the following technical solutions depending on the context: executing A in some embodiments (executing A independently of B); executing B in some embodiments (executing B independently of A); selectively executing either A or B in some embodiments (A and B are selectively executed); and executing both A and B in some embodiments (both A and B are executed). The same applies when there are more branches such as A, B, and C.

In some embodiments, recording methods such as "A or B" may include the following technical solutions depending on the context: executing A in some embodiments (executing A independently of B); executing B in some embodiments (executing B independently of A); and selectively executing either A or B in some embodiments (A and B are selectively executed). The same applies when there are more branches such as A, B, and C.

Prefixes such as "first" and "second" in the embodiments of the disclosure are merely used to distinguish different description objects and do not limit the position, order, priority, quantity, or content of the description objects. For the description of the description objects, refer to the description in the claims or the context of the embodiments, and unnecessary limitations shall not be constituted due to the use of the prefixes. For example, when the description object is a "field", the ordinal numbers before "field" in "the first field" and "the second field" do not limit the position or order between the "fields", and "first" and "second" do not limit whether the "fields" modified thereby are in the same message or the order between "the first field" and "the second field". For another example, when the description object is a "level", the ordinal numbers before "level" in "the first level" and "the second level" do not limit the priority between the "levels". For yet another example, the quantity of the description object is not limited by the ordinal number and may be one or more. Taking "the first apparatus" as an example, the quantity of the "apparatus" may be one or more. In addition, objects modified by different prefixes may be the same or different. For example, when the description object is an "apparatus", "the first apparatus" and "the second apparatus" may be the same or different apparatuses, and their types may be the same or different; for another example, when the description object is "information", "the first information" and "the second information" may be the same or different information, and their contents may be the same or different.

In some embodiments, expressions such as "including A", "containing A", "used to indicate A", and "carrying A" may be interpreted as directly carrying A or indirectly indicating A.

In some embodiments, the terms "in response to...", "in response to determining that...", "in the case that...", "when...", "at the time when...", "if...", and "in the event that..." may be used interchangeably.

In some embodiments, terms such as "greater than", "greater than or equal to", "not less than", "more than", "more than or equal to", "no less than", "higher than", "higher than or equal to", "not lower than", and "above" may be used interchangeably; terms such as "less than", "less than or equal to", "not greater than", "fewer than", "fewer than or equal to", "no more than", "lower than", "lower than or equal to", "not higher than", and "below" may be used interchangeably.

In some embodiments, "apparatus" may be construed as either entity or virtual. Names of the "apparatus" are not limited to those recorded in the embodiments. The terms such as "apparatus", "equipment", "device", "circuit", "network element", "node", "function", "unit", "section", "system", "network", "chip", "chip system", "entity" and "subject" may be used interchangeably.

In some embodiments, the term "network" may be interpreted as an apparatus included in a network (e.g., an access network device, a core network device, etc.).

In some embodiments, the terms "access network device (AN device)", "radio access network device (RAN device)", "base station (BS)", "radio base station", "fixed station", and, in some embodiment, may be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", and "bandwidth part (BWP)" may be used interchangeably.

In some embodiments, the terms "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "wireless terminal", "remote terminal", "handset", "user agent", "mobile client", and "client" may be used interchangeably.

In some embodiments, an access network device, a core network device, or a network device may be replaced with a terminal. For example, the embodiments of the disclosure are also applicable to a structure (e.g., device-to-device (D2D), vehicle-to-everything (V2X), etc.) where communication between the access network device, the core network device, or the network device and the terminal is replaced with communication among a plurality of terminals. In this case, a structure may also be adopted in which the terminal has all or part of the functions of the access network device. In addition, terms such as "uplink" and "downlink" may also be replaced with terms (e.g., "sidelink") corresponding to inter-terminal communication. For example, an uplink channel and a downlink channel may be replaced with a sidelink channels, and an uplink and a downlink may be replaced with a sidelink.

In some embodiments, a terminal may be replaced with an access network device, a core network device, or a network device. In this case, a structure may also be adopted in which the access network device, the core network device, or the network device has all or part of the functions of the terminal.

In some embodiments, acquiring data, information, etc., may comply with the laws and regulations of the country where it is located.

In some embodiments, data, information, etc., may be acquired with the user's consent.

In addition, each element, each row, or each column in the tables of the embodiments of the disclosure may be implemented as an independent embodiment, and any combination of any elements, any rows, or any columns may also be implemented as an independent embodiment.

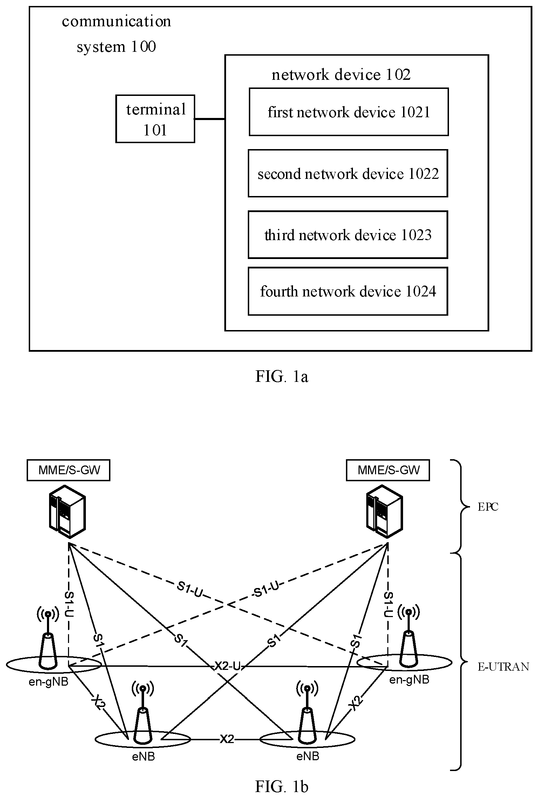

FIG. 1a is a schematic diagram of a communication system according to an embodiment of the disclosure.

As shown in FIG. 1a, a communication system 100 may include a terminal 101 and a network device 102.

In some embodiments, the terminal 101 includes, for example, at least one of a mobile phone, a wearable device, an Internet of Things (IoT) device, a vehicle with communication functions, an intelligent vehicle, a Pad, a computer with wireless transceiving functions, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, the network device 102 may include an access network device and a core network device.

In some embodiments, the access network device may be, for example, a node or device that connects a terminal to a wireless network. The access network device may include at least one of an evolved nodeB (eNB) in a 5G communication system, a next generation eNB (ng-eNB), a next generation nodeB (gNB), a node B (NB), a home nodeB (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (open RAN), a cloud base station (cloud RAN), a base station in other communication systems, and an access node in a wireless fidelity (Wi-Fi) system, but is not limited thereto.

In some embodiments, the technical solutions of the disclosure may be applicable to the open RAN architecture. In this case, interfaces between access network devices or within the access network device involved in the embodiments of the disclosure may be converted into internal interfaces of the open RAN, and procedures and information interaction between these internal interfaces may be implemented by software or programs.

In some embodiments, the access network device may consist of a central unit (CU) and a distributed unit (DU). The CU may also be referred to as a control unit. The CU-DU architecture enables protocol layers of the access network device to be separated. Functions of some protocol layers are subject to a centralized control of the CU, and functions of the remaining part or all of the protocol layers are distributed in the DU, which is centrally controlled by the CU. However, the disclosure is not limited thereto.

In some embodiments, the core network device may be a single device including one or more network elements, or may be a plurality of devices or device groups each including one or more network elements. The one or more network elements may be virtual or physical. A core network includes, for example, at least one of an evolved packet core (EPC), a 5G core network (5GCN), or a next generation core (NGC).

In some embodiments, the network device 102 may include: a first network device 1021, a second network device 1022, a third network device 1023, and a fourth network device 1024.

In some embodiments, the first network device 1021 may be a first node.

In some embodiments, the second network device 1022 may be a second node.

In some embodiments, the third network device 1023 may be a third node.

In some embodiments, the fourth network device 1024 may be a fourth node.

It is understandable that the communication system described in the embodiments of the disclosure is for the purpose of more clearly illustrating the technical solutions of the embodiments of the disclosure, and does not constitute a limitation on the technical solutions proposed in the embodiments of the disclosure. As understood by those of ordinary skill in the art, with the evolution of system architectures and the emergence of new service scenarios, the technical solutions proposed in the embodiments of the disclosure are equally applicable to similar technical problems.

The following embodiments of the disclosure may be applied to the communication system 100 shown in FIG. 1a, or some entities in the communication system 100, but are not limited thereto. Each subject shown in FIG. 1a is an example. The communication system may include all or part of the entities in FIG. 1a, or may also include other entities not shown in FIG. 1a. The number and form of each entity are arbitrary. Connection relationships between entities are exemplary. Each entity may be unconnected or connected with each other, and the connection may be in any manner, either direct connection or indirect connection, wired connection or wireless connection.

The embodiments of the disclosure may be applied to long term evolution (LTE), LTE-advanced (LTE-A), LTE-beyond (LTE-B), SUPER 3G, international mobile telecommunications-advanced (IMT-Advanced), 4th generation mobile communication system (4G), 5th generation mobile communication system (5G), 5G new radio (NR), future radio access (FRA), new-radio access technology (new RAT), NR, new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wide band (UWB), Bluetooth (registered trademark), public land mobile network (PLMN), device-to-device (D2D) system, machine to machine (M2M) system, internet of things (IoT) system, vehicle-to-everything (V2X), systems using other communication methods, next-generation systems extended based on them, etc. In addition, a plurality of systems may be combined (for example, a combination of LTE or LTE-A and 5G, etc.) for application.

In some embodiments, the method for processing information illustrated in the embodiments of the disclosure may be applied to a communication system adopting dual connectivity (DC) technology, where the DC technology includes the following types.

### Type 1: Multi-radio dual connectivity (MR-DC)

MR-DC is a generalized intra-evolved universal terrestrial radio access (Intra-E-UTRA) DC. In this technology, a UE may utilize radio resources provided by two different resource scheduling units. The two resource scheduling units are located on two different new generation RAN (NG-RAN) nodes and connected via a non-ideal backhaul. One of the two resource scheduling units provides an NR access, and the other of the two resource scheduling units provides an E-UTRA or an NR access. The base station of a primary cell may serve as an MN, and the base station of a secondary cell may serve as an SN. The MN and the SN are connected through a network interface, with at least the MN connected to the core network.

### Type 2: MR-DC based on an evolved packet core (EPC)

Referring to FIG. 1b, which is an architecture diagram of E-UTRA-NR-DC (EN-DC). An E-UTRAN supports the MR-DC via the EN-DC, where the UE is connected to a base station eNB serving as the MN and a base station en-gNB serving as the SN. The base station eNB is connected to an EPC core network via an S1 interface and connected to the base station en-gNB via an X2 interface. The base station en-gNB may also be connected to the EPC core network via an S1-U interface and connected to other base station en-gNBs via an X2-U interface.

Core network devices of the EPC may include: a mobility management entity (MME) and/or a service-gateway (S-GW).

### Type 3: MR-DC based on 5GC

The 5GC supports the following types of DC:

### 1. EN-DC and next generation EN-DC (NGEN-DC)

The 5G RAN (NG-RAN) supports the NGEN-DC, where the UE is connected to a ng-eNB serving as the MN and a gNB serving as the SN. The base station ng-eNB is connected to the 5GC, and the base station gNB is connected to the base station ng-eNB via the Xn interface.

### 2. NR-E-UTRA-DC (NE-DC)

The NG-RAN supports the NE-DC, where the UE is connected to a base station gNB serving as the MN and a base station ng-eNB serving as the SN. The base station gNB is connected to the 5GC, and the base station ng-eNB is connected to the base station gNB via the Xn interface.

### 3. NR-NR DC (NR-DC)

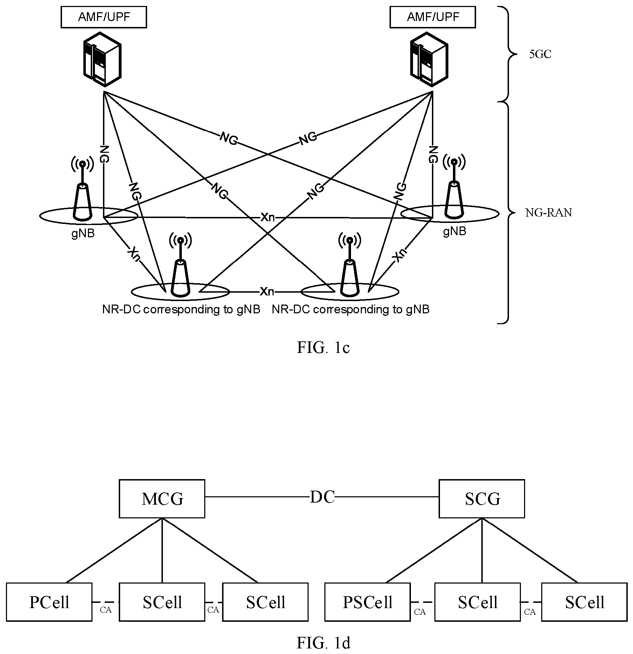

Referring to FIG. 1c, which is a schematic diagram of NR-DC. The NG-RAN supports the NR-DC, where the UE is connected to a base station gNB serving as the MN and another base station gNB serving as the SN. The master base station gNB is connected to the 5GC via an NG interface, and the two base station gNBs are connected to each other via the Xn interface. The secondary base station gNB may also be connected to the 5GC via an NG-U interface. In addition, the NR-DC may also be applied to scenarios where the UE accesses a single base station gNB that acts as both the MN and the SN. A master cell group (MCG) and a secondary cell group (SCG) are configured simultaneously.

In some embodiments, under the DC, the UE may access two cells or two CGs at the same time. For example, the UE may access a PCell and a secondary cell (SCell) at the same time, or access an MCG and an SCG simultaneously. The MCG includes a plurality of cells, among which one cell is configured to initiate an initial access, and this cell is referred to as the PCell. As the name implies, the PCell is a primary cell within the MCG. Other cells in the MCG except the PCell are SCells. The PCell and SCells in the MCG are combined via carrier aggregation (CA) to improve a transmission rate and meet rate requirements of the user.

In some embodiments, the primary cell in the MCG may be abbreviated as PCell, and the secondary cell may be abbreviated as SCell. A primary secondary cell in the SCG may be abbreviated as PSCell. Under normal circumstances, most control signaling of the UE is only transmitted on the PCell or the PSCell. In some embodiments, a concept of special (primary) cell (sPcell) is proposed. The sPcell may include: the PCell and/or the PSCell.

As shown in FIG. 1d, which is a schematic diagram of an MCG and an SCG. When the UE supports the DC, multi-connectivity or the CA, a serving cell of the UE may include the PCell and the SCell. A serving CG of the UE may include: the MCG and the SCG.

In one embodiment, in a 5G system, the UE may perform a mobility operation based on a condition preconfigured by the network and a preconfigured cell or CG corresponding to the condition. When the UE meets the preconfigured condition (e.g., a specific measurement event), the UE changes the serving cell or CG to the preconfigured cell or CG.

A condition-triggered mobility procedure may include:
a CPA; and
a CPC.

The UE may also change a configuration of a special cell or a special CG after meeting the preconfigured condition according to a network instruction. For example, changing a PCell configuration of the UE from a candidate cell or candidate CG configuration-1 to a candidate cell or candidate CG configuration-2. The candidate cell is an alternative cell that the UE may access as the serving cell of the UE. The candidate CG is an alternative CG that the UE may access as the serving CG of the UE.

However, the UE with a CPC/CPA configuration must delete the CPC/CPA configuration upon completing a random access to the target PSCell. That is, the UE switches the serving cell to the target PSCell based on CPC or CPA via the random access.

Therefore, when the network does not reconfigure and re-initialize the CPC/CPA, the UE may not continue to perform the CPC/CPA subsequently, which may increase a latency of handover or SCG change and increase a signaling overhead. Particularly in FR2 scenarios, when a CG is changed frequently, the latency of handover or SCG change may be increased and the signaling overhead may be increased. The CG includes the MCG and the SCG.

Selective activation of CGs in MR-DC is proposed in Release 18 (R18) mobility enhancement. Selective activation of CGs may also be referred to as CG activation. After a CG or PSCell change or addition is triggered, the UE does not delete a conditional reconfiguration configuration (i.e., conditional PSCell addition/change (CPAC) configuration). In a case where the RRC does not reconfigure and re-initialize a configuration of the selective activation of CGs, an original CPAC configuration may still be used for a subsequent CPAC. Supporting the subsequent CPAC may effectively reduce the signaling overhead and shorten an interruption time.

It should be noted that subsequent CPAC may be understood as a process of performing, in a case of the CPC or the CPA being not without reconfigured and re-initialized, a CPAC operation based on a CPC or CPA configuration preconfigured by a candidate PSCell.

A configuration of the subsequent CPAC includes, but is not limited to, at least one of: a configuration ID, an execution condition, and a configuration of a corresponding candidate target cell (or CG).

The network side may configure reference configurations and configurations of a plurality of subsequent CPACs for the UE simultaneously.

The configuration ID is an ID indicating a relevant configuration.

The execution condition is a condition for triggering the mobility operation (a condition needs to satisfy by the UE for triggering the CPAC.

The configuration of the corresponding candidate target cell (or CG) is a candidate configuration corresponding to a target cell accessed by the UE when triggering the mobility operation, and this configuration may be represented by an RRC reconfiguration (RRCReconfiguration).

A reference configuration refers to a reference configuration corresponding to a candidate target configuration, and the candidate target configuration is a delta configuration of the reference configuration. A complete configuration may be generated based on the candidate target configuration and the reference configuration, which may be represented by RRCReconfiguration. The UE shall apply the complete configuration when executing the CPAC. The reference configuration may be a specific configuration generated by the network or may be a current configuration of the UE. The reference configuration is only required for a configuration for the subsequent CPAC.

For the CPAC in R16 and R17, the CPAC configuration does not include the reference configuration, but only includes the configuration ID, the execution condition, and the configuration of the corresponding candidate target cell (or CG). When the UE triggers the mobility operation, the target cell accessed may directly apply the configuration of the candidate target cell (or CG).

In the subsequent CPAC, the network device may provide candidate cell/CG configurations to the terminal. These candidate cell/ CG configurations may be applied multiple times subsequently without the network device re-providing the cell/cell group configurations. That is, for the subsequent CPAC, even if the terminal applies a new cell group configuration and/or accesses a new cell, the UE will not delete an original configuration of the subsequent CPAC.

In R17 CPAC, the UE may support MN-initiated CPC and SN-initiated CPC. A triggering condition for CPC may be: a condition where the MN-initiated CPC may be configured with conditional event (CondEvent) A4, and the SN-initiated CPC may be configured with CondEvent A5.

CondEvent A3 is: a conditional reconfiguration candidate (cell) becomes an amount of offset better than the PCell/PSCell.

CondEvent A4 is: a conditional reconfiguration candidate (cell) becomes better than an absolute threshold value.

CondEvent A5 is: the PCell/PSCell becomes worse than absolute threshold value 1, and a conditional reconfiguration candidate (cell) becomes better than another absolute threshold value 2.

For the subsequent CPAC in R18, both MN-initiated subsequent CPAC and SN-initiated subsequent CPAC are supported.

The MN-initiated subsequent CPAC may include the following operations.

For MN-initiated inter-SN SCG selective activation, the source MN generates the execution condition for an initial CPAC.

An execution of subsequent CPC may also have the following alternative options:

Option 1: The source MN generates the execution condition for all subsequent CPCs.

Option 2: The C-SN may generate the execution condition for the subsequent CPC.

The SN-initiated subsequent CPAC may be as follows.

For SN-initiated inter-SN SCG selective activation, the S-SN generates the execution condition for an initial CPC.

For SN-initiated SCG selective activation, the C-SN generates the execution condition for the subsequent CPC.

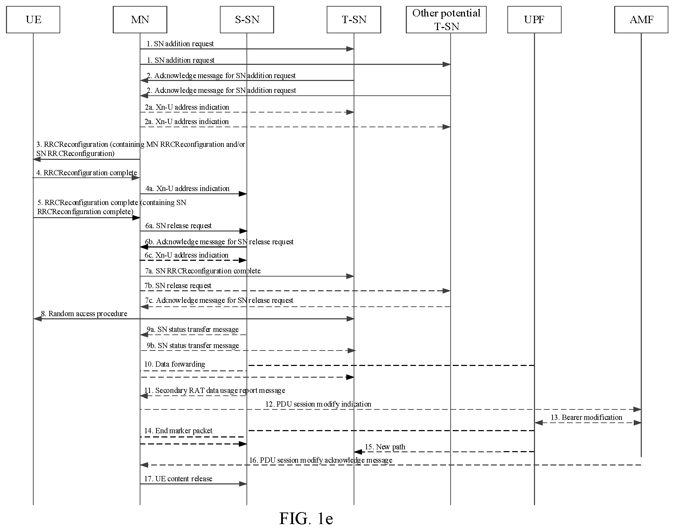

As shown in FIG. 1e, which is a schematic flowchart of a MN-initiated CPC according to an embodiment of the disclosure, showing the MN-initiated CPC procedure executing by the inter-SN CPC and used for an inter-SN CPC configuration.

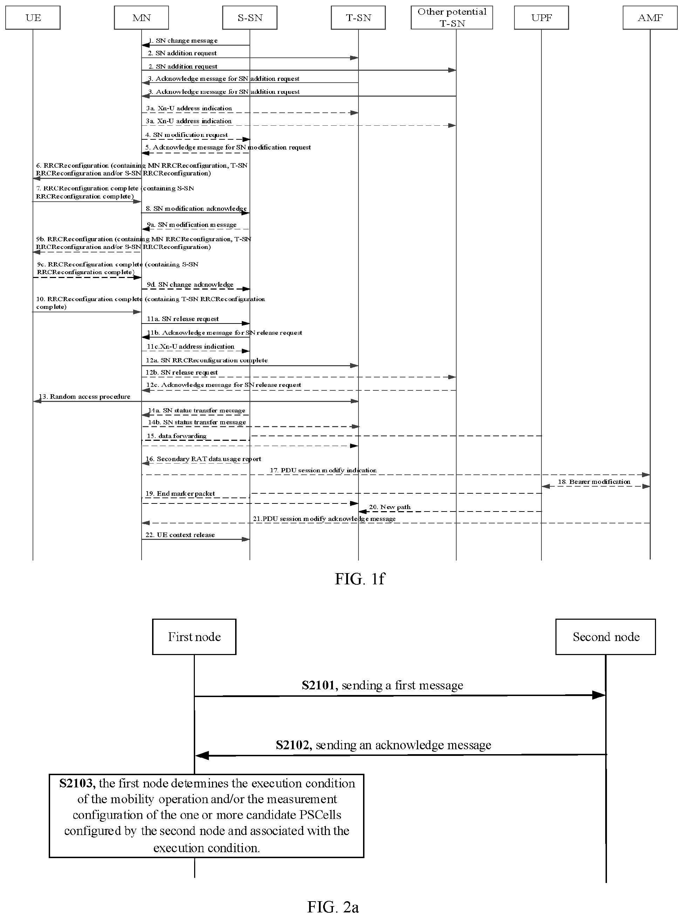

As shown in FIG. 1f, which is a schematic flowchart of a SN-initiated CPC according to an embodiment of the disclosure, showing the SN-initiated CPC procedure executing by the inter-SN CPC and used for an inter-SN CPC configuration.

An SN modification procedure may also be initiated by the S-SN. The SN modification procedure initiated by the S-SN may include at least one of:
an SN modification initiated by the S-SN for modifying the inter-SN CPC configuration initiated by a current SN; or
by canceling all configured PSCells on the C-SN and/or releasing a context of the UE on the C-SN, a deletion source of a candidate node triggered by the S-SN.

In some embodiments, to support the subsequent CPAC initiated by the MN/SN in R18, a candidate CN generates the execution condition for a candidate CPC. In some cases, the C-SN may not be aware of candidate PSCells currently having been configured for the UE and candidate PSCells prepared to be configured by other C-SNs. When the C-SN cannot obtain the candidate PSCells having been configured and prepared to be configured for the subsequent CPAC for the UE, the C-SN is unable to generate the execution condition for the subsequent CPAC for these candidate PSCells.

In some embodiments, the MN sends to the C-SN the candidate PSCells recommended by the S-SN and/or the MN for the C-SN to prepare for CPC. However, the MN does not inform the C-SN of the candidate PSCells currently having been configured and prepared to be configured for supporting the subsequent CPAC for the UE.

FIG. 2a is an interaction diagram of a method for processing information according to an embodiment of the disclosure. As shown in FIG. 2a, the embodiment of the disclosure relates to a method for processing information applied to the communication system 100, the method includes the following steps.

At step S2101, a first node sends a first message to a second node.

In some embodiments, the second node receives the first message sent by the first node.

In some embodiments, the first node may include an MN. The MN may be an access network device corresponding to a PCell or an MCG.

It may be understood that the first node is associated with the PCell of a terminal. Specifically, the PCell of the terminal is a cell of the first node.

In some embodiments, the second node may include a C-SN. The C-SN may be a base station corresponding to a candidate PSCell. The C-SN may serve as an alternative node of an SN of the terminal. The C-SN may provide a candidate SCell for the terminal, and the candidate SCell may be referred to as a SCell of the terminal subsequently.

It may be understood that the second node is associated with one or more candidate PSCells of the terminal. Specifically, one or more cells of the second node may serve as the one or more candidate PSCells of the terminal. A candidate PSCell may serve as a PSCell of the terminal subsequently.

In some embodiments, the terminal may be a terminal supporting DC, multi-connectivity, or CA.

In some embodiments, the first node sends the first message to a plurality of C-SNs of the terminal.

In some embodiments, the first message may carry indication information.

In some embodiments, the indication information is configured for the second node to configure an execution condition for executing a mobility operation.

In some embodiments, the first message is configured for an SN addition for the terminal.

It should be noted that the SN addition for the terminal is initiated by the MN, and a SN addition procedure for the terminal is used to establish a context of the terminal at this SN, so that this SN may provide resources for the terminal.

In some embodiments, the first message may include an SN addition request message.

It should be noted that the first node may reuse an existing SN addition request message to send the indication information to the second node. On the one hand, this enables the second node to obtain one or more candidate PSCells for the mobility operation indicated by the indication information according to the indication information, so that the second node may configure the execution condition for executing the mobility operation for the one or more candidate PSCells. On the other hand, a signaling overhead may be reduced.

In some embodiments, the first message may be an Xn message.

It should be noted that the first node and the second node are connected via an Xn interface, and the first node sends the first message to the second node via the Xn interface.

In some embodiments, the Xn message may carry one or more parameters, where the one or more parameters indicate the one or more candidate PSCells for executing the mobility operation.

For example, the Xn message may carry a first parameter, which indicates one or more candidate PSCells having been configured for the terminal and one or more candidate PSCells prepared to be configured for the terminal.

For another example, the Xn message may carry at least one of:
a second parameter, indicating the one or more candidate PSCells having been configured for the terminal; or
a third parameter, indicating the one or more candidate PSCells prepared to be configured for the terminal.

In some embodiments, the aforementioned parameters may include at least one of:
cell identity information of the one or more candidate PSCells;
a node ID of a node associated with the one or more candidate PSCells; or
cell measurement result information of the one or more candidate PSCells.

For example, parameters in the Xn message may include an information list of a set of C-SNs. Information corresponding to each C-SN in the information list includes one or more candidate PSCells corresponding to the C-SN.

In some embodiments, the Xn message may carry one or more indication bits, and the one or more candidate PSCells for the terminal are indicated by different bit values of the one or more indication bits.

In some embodiments, the Xn message includes an inter-node RRC message container.

It should be noted that the Xn message may include one or more first message containers. Each C-SN corresponds to one first message container, and the first message container may be the inter-node RRC message container. It may be understood that the first message container may be configured to carry an inter-node RRC message.

It should be noted that the first message container included in the Xn message is not limited to the aforementioned inter-node RRC message container, but may also include other message containers related to Xn message transmission or contents related to other RRC messages or information.

In some embodiments, the indication information is carried in the inter-node RRC message container.

In some embodiments, the inter-node RRC message container may carry one or more indication bits, and the one or more candidate PSCells for the terminal are indicated by different bit values of the one or more indication bits.

In some embodiments, the inter-node RRC message container further includes: CG-ConfigInfo.

It may be understood that the first message container in the Xn message may be configured to carry CG-ConfigInfo. The indication information is carried in the CG-ConfigInfo.

It should be noted that CG-ConfigInfo is configured to carry configuration information related to a cell or a CG.

In some embodiments, CG-ConfigInfo may include at least one of:
cell configuration information;
a radio bearer configuration;
capability information of the terminal;
a cell measurement report; or
a measurement configuration.

In some embodiments, the inter-node RRC message container may carry one or more parameters, where the one or more parameters indicate the one or more candidate PSCells for executing the mobility operation.

For example, the inter-node RRC message container may carry the first parameter, which indicates one or more candidate PSCells having been configured for the terminal and one or more candidate PSCells prepared to be configured for the terminal.

For another example, the inter-node RRC message container may carry at least one of:
the second parameter, indicating the one or more candidate PSCells having been configured for the terminal; or
the third parameter, indicating the one or more candidate PSCells prepared to be configured for the terminal.

In some embodiments, the aforementioned parameters may include at least one of:
the cell identity information of the one or more candidate PSCells;
the node ID of the node associated with the one or more candidate PSCells; or
the cell measurement result information of the one or more candidate PSCells.

For example, parameters in the inter-node RRC message container may include an NR neighboring cell measurement list.

For another example, the parameters in the inter-node RRC message container may include a cell list of candidate PSCells. The cell list may include frequency information and a candidate PSCell set corresponding to the frequency information.

In some embodiments, the second parameter may be indicated by an RRC reconfiguration message corresponding to the first node. It should be noted that the first node sends, to the second node, configuration information of a conditional reconfiguration configured by the first node for the mobility operation. The configuration information includes the one or more candidate PSCells having been configured for the terminal.

In some embodiments, each RRC message is associated with one C-SN. The RRC message includes one or more candidate PSCells corresponding to the C-SN. The Xn message includes inter-node RRC messages corresponding to a plurality of C-SNs, and the inter-node RRC message includes one or more SCells corresponding to the corresponding SN.

In some embodiments, the Xn message may include a plurality of message containers, and each message container is associated with one C-SN. The message container includes the RRC message corresponding to the associated C-SN. The RRC message includes one or more candidate PSCells having been configured for the terminal and/or prepared to be configured for the terminal by the corresponding C-SN.

In other embodiments, the indication information is carried in any position of the Xn message. For example, the indication information is not carried in the inter-node RRC message container.

It should be noted that the Xn message may include a first message container and a second message container, where the first message container may be the inter-node RRC message container. The second message container is different from the first message container. The indication information may be carried in the second message container.

In some embodiments, the Xn message includes inter-node RRC information.

It should be noted that the Xn message may include one or more pieces of inter-node RRC information, and each C-SN corresponds to one piece of inter-node RRC information. It should be noted that including the inter-node RRC information in the Xn message may be implemented by including information, which is described as an RRC information element (IE), in the Xn message.

In some embodiments, the indication information is carried in the inter-node RRC information.

In some embodiments, the Xn message may include a plurality of message containers, and each message container is associated with one C-SN. The message container includes the inter-node RRC information corresponding to the associated C-SN. The inter-node RRC information includes one or more candidate PSCells having been configured for the terminal and/or prepared to be configured for the terminal by the corresponding C-SN.

In some embodiments, the mobility operation may include various operations related to an update (or change) of a serving cell of the terminal.

In some embodiments, the mobility operation may include various operations related to an update (or change) of the PSCell of the terminal.

In some embodiments, the mobility operation may include an addition operation of the second node or a modification operation of the second node.

In some embodiments, the mobility operation at least one of:
a CPA operation; or
a CPC operation.

In some embodiments, the mobility operation include at least one of:
a mobility operation initiated by the first node; or
a mobility operation initiated by a fourth node.

In some embodiments, the fourth node may include an S-SN, which may be a base station corresponding to a SCell or an SCG.

It may be understood that the fourth node is associated with the SCell of the terminal.

In some embodiments, the first node sending the first message to the second node includes one of:
in response to the first node initiating the addition operation of the second node or the modification operation of the second node, the first node sending the first message to the second node;
in response to the first node receiving a third message indicating that the fourth node initiates the addition operation of the second node or the modification operation of the second node, the first node sending the first message to the second node;
in response to the first node initiating an addition operation of a third node or a modification operation of the third node, the first node sending the indication information to the second node; and
in response to the first node receiving a third message indicating that the fourth node initiates the addition operation of the third node or the modification operation of the third node, the first node sending the indication information to the second node.

In some embodiments, the indication information may include first information.

The first information indicates a first candidate PSCell set. The first candidate PSCell set includes one or more candidate PSCells prepared to be configured for the terminal.

In some embodiments, the first candidate PSCell set may include at least one of:
all candidate PSCells prepared to be configured for the terminal; or
one or more candidate PSCells associated with the third node and prepared to be configured for the terminal, in which the third node is different from the second node.

In some embodiments, all candidate PSCells prepared to be configured for the terminal may include at least one of:
one or more candidate PSCells associated with the second node and prepared to be configured for the terminal;
in the case where the third node exists, one or more candidate PSCells associated with the third node and prepared to be configured for the terminal; or
in the case where the fourth node continues to serve as the SN of the terminal or the fourth node will serve as a C-SN of the terminal, one or more candidate SCells prepared to be configured for the fourth node.

In some embodiments, the third node may include the C-SN. The C-SN may be the base station corresponding to the candidate PSCell. In addition, the third node is different from the second node.

In some embodiments, the first candidate PSCell set may further include:
one or more candidate PSCells having been configured for the terminal.

In some embodiments, the first node initiates the addition operation of the second node or the modification operation of the second node, and the first candidate PSCell set is determined by the first node.

In other embodiments, the fourth node initiates the addition operation of the second node or the modification operation of the second node, and the first candidate PSCell set is determined by the third message.

In some embodiments, the indication information includes at least one of:
cell identity information of the one or more candidate PSCells;
a node ID of a node associated with the one or more candidate PSCells;
cell measurement result information of the one or more candidate PSCells; or
cell frequency point information of the one or more candidate PSCells.

In some embodiments, the cell identity information may include at least one of:
a physical cell identifier (PCI); or
a cell global identifier (CGI).

In some embodiments, the node ID of the node associated with the one or more candidate PSCells may be understood as a base station ID of the node associated with the one or more candidate PSCells.

In some embodiments, the cell measurement result information may include at least one of:
a reference signal received power (RSRP);
a reference signal receiving quality (RSRQ);
a signal to interference-plus-noise ratio (SINR); or
a received signal strength indicator (RSSI).

In some embodiments, the indication information may further include seventh information.

In some embodiments, the seventh information indicates at least one of:
a mobility operation having been configured for the terminal; or
a mobility operation prepared to be configured for the terminal.

It should be noted that the mobility operation having been configured for the terminal may be understood as that one or more candidate PSCells corresponding to the mobility operation are one or more candidate PSCells having been configured. The one or more candidate PSCells corresponding to the mobility operation may be understood as one or more candidate PSCells prepared to be configured for the terminal.

It should be noted that the embodiments of the disclosure explicitly indicate a configuration status of the mobility operation via the seventh information, so that the second node may quickly and accurately obtain the configuration status of the mobility operation based on the seventh information.

In other embodiments, the first node may indicate the configuration status of the mobility operation to the second node in an implicit manner.

For example, a reserved information field in the first message may be used to implicitly indicate the configuration status of the mobility operation based on whether the reserved information field carries a configuration ID of the mobility operation. It should be noted that the configuration ID refers to an ID corresponding to the mobility operation having been configured, and there is no corresponding configuration ID for the mobility operation prepared to be configured for the terminal. Therefore, the configuration status of the mobility operation may be determined based on whether the reserved information field in the first message carries the configuration ID of the mobility operation.

At step S2102, the second node sends an acknowledge message to the first node.

In some embodiments, the first node receives the acknowledge message sent by the second node.

In some embodiments, the acknowledge message may be an acknowledge message corresponding to the first message.

In some embodiments, the acknowledge message may include a SN addition request acknowledge message.

In some embodiments, the acknowledge message is configured to determine the execution condition of the mobility operation and/or the measurement configuration of one or more candidate PSCells configured by the second node.

In some embodiments, the execution condition of the mobility operation may include the execution condition corresponding to one or more candidate PSCells associated with the third node and prepared to be configured for the terminal.

It should be noted that the execution condition of the mobility operation may be understood as a condition that the terminal needs to satisfy for adding or changing the candidate PSCell in a case where the PSCell configured by the second node serve as the serving cell of the terminal. Each candidate PSCell associated with the third node corresponds to one execution condition.

The execution condition corresponding to any candidate PSCell associated with the third node may be understood as a condition that the terminal needs to satisfy for switching from the candidate PSCell configured by the second node to the candidate PSCell associated with the third node in a case where the candidate PSCell configured by the second node serves as the serving cell of the terminal.

In some embodiments, the acknowledge message may include the execution condition of the mobility operation.

It should be noted that after receiving the first information in the first message, the second node may configure the execution condition for executing the mobility operation for the terminal according to the one or more candidate PSCells in the first candidate PSCell set indicated by the first information. It may be understood that the acknowledge message carries the execution condition generated by the second node.

In other embodiments, the acknowledge message may include an event type and/or a parameter value corresponding to the execution condition of the mobility operation.

In some embodiments, the event type and/or the parameter value corresponding to the execution condition are configured for the first node and/or the fourth node to generate the execution condition of the mobility operation.

In some embodiments, the first node may generate the execution condition of the mobility operation associated with the second node according to the event type and/or the parameter value corresponding to the execution condition carried in the acknowledge message.

In other embodiments, in a case where the fourth node initiates the mobility operation, the first node may forward the event type and/or parameter value corresponding to the execution condition carried in the acknowledge message to the fourth node, and the fourth node generates the execution condition of the mobility operation associated with the second node.

In some embodiments, the event type of CondEvent corresponding to the execution condition may include at least one of:
CondEvent A3;
CondEvent A4; or
CondEvent A5.

In some embodiments, the parameter value includes at least one of:
an offset;
a threshold value;
a trigger time; or
a hysteresis value.

It should be noted that the parameter value may be understood as the parameter value of an event corresponding to the execution condition, for example, A3 offset; A4 threshold value, A5 threshold value 1, A5 threshold value 2, etc.

In some embodiments, the acknowledge message may further include the measurement configuration of the one or more candidate PSCells configured by the second node.

In some embodiments, the measurement configuration is associated with the measurement configuration of the MN and/or the SN, in which the MN includes a source MN and/or a current MN, and the SN includes an S-SN and/or a C-SN.

It should be noted that the measurement configuration of the one or more candidate PSCells configured by the second node is set with reference to the measurement configuration of the MN and/or the SN.

In some embodiments, the acknowledge message may include a measurement ID, which indicates the measurement configuration corresponding to the execution condition.

For example, when the measurement ID carried in the acknowledge message indicates that the measurement configuration corresponding to the execution condition is the measurement configuration of the C-SN, it means that the execution condition is generated with reference to the measurement configuration of the C-SN.

For another example, when the measurement ID carried in the acknowledge message indicates that the measurement configuration corresponding to the execution condition is the measurement configuration of the source-SN, it means that the execution condition is generated with reference to the measurement configuration of the source-SN.

For yet another example, when the measurement ID carried in the acknowledge message indicates that the measurement configuration corresponding to the execution condition is the measurement configuration of the source MN, it means that the execution condition is generated with reference to the measurement configuration of the source MN.

At step S2103, the first node determines the execution condition of the mobility operation and/or the measurement configuration of the one or more candidate PSCells configured by the second node and associated with the execution condition.

In some embodiments, the first node determines, according to the acknowledge message, the execution condition of the mobility operation and/or the measurement configuration of the one or more candidate PSCells configured by the second node and associated with the execution condition.

In some embodiments, the first node may determine, according to the acknowledge messages sent by a plurality of C-SNs, the execution conditions of the mobility operations configured by the plurality of C-SNs and the measurement configuration of one or more candidate PSCells configured by each C-SN.

In some embodiments, the first node sends configuration information to the terminal.

In some embodiments, the configuration information indicates the execution condition of the mobility operation and/or the measurement configuration of the one or more candidate PSCells configured by the C-SN.

It may be understood that the first node may integrate, according to the acknowledge messages sent by the plurality of C-SNs, the execution conditions of the mobility operations configured by the plurality of C-SNs and the measurement configuration of one or more candidate PSCells configured by each C-SN to obtain the configuration information, and send the configuration information to the terminal to facilitate the terminal to perform the mobility operation.

In some embodiments, the term "information" may be used interchangeably with terms such as "message", "signal", "signaling", "report", "configuration", "indication", "instruction", "command", "channel", "parameter", "field", "data", etc.

In some embodiments, the term "send" may be used interchangeably with terms such as "transmit", "report", "transfer", etc.

The method for processing information involved in the embodiments of the disclosure may include at least one of steps S2101 to S2103. For example, step S2101 may be implemented as an independent embodiment, but is not limited thereto.

In some embodiments, steps S2102 and S2103 are optional, and one or more of these steps may be omitted or replaced in different embodiments. It may be understood that in the case where the first node sends the first message carrying the first information to the second node, the second node may refuse to configure the one or more candidate PSCells. In a case where the first node does not receive the acknowledge message of the first message, the first node does not need to determine the execution condition of the mobility operation and/or the measurement configuration.

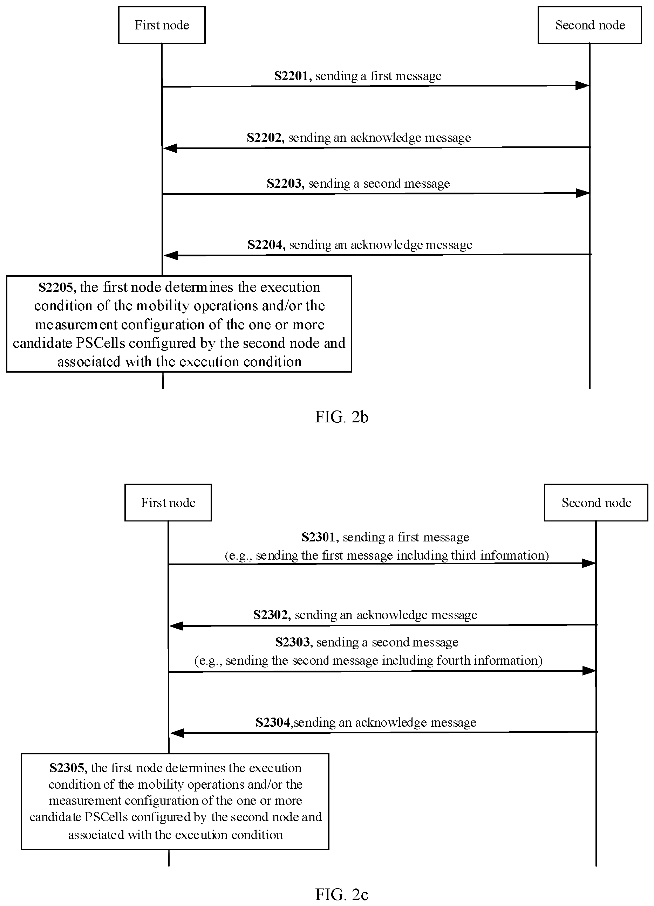

FIG. 2b is an interaction diagram of a method for processing information according to an embodiment of the disclosure. As shown in FIG. 2b, the embodiment of the disclosure relates to a method for processing information applied to the communication system 100, the method includes the following steps.

At step S2201, a first node sends a first message to a second node.

In some embodiments, the second node receives the first message sent by the first node.

In some embodiments, the first node may include an MN. The MN may be an access network device corresponding to a PCell or an MCG.

It may be understood that the first node is associated with the PCell of a terminal. Specifically, the PCell of the terminal is a cell of the first node.

In some embodiments, the second node may include a C-SN. The C-SN may be a base station corresponding to a candidate PSCell. The C-SN may serve as an alternative node of an SN of the terminal. The C-SN may provide a candidate SCell for the terminal, and the candidate SCell may be referred to as a SCell of the terminal subsequently.

It may be understood that the second node is associated with one or more candidate PSCells of the terminal. Specifically, one or more cells of the second node may serve as the one or more candidate PSCells of the terminal. A candidate PSCell may serve as a PSCell of the terminal subsequently.

In some embodiments, the terminal may be a terminal supporting DC, multi-connectivity, or CA.

In some embodiments, the first message is configured for an SN addition for the terminal.

It should be noted that the SN addition for the terminal is initiated by the MN, and an SN addition procedure for the terminal is used to establish a context of the terminal at this SN, so that this SN may provide resources for the terminal.

It should be noted that the first message may be a message solely configured for the SN addition for the terminal, and may not carry any information. It may be understood that the first message is solely configured to request the second node to configure one or more candidate PSCells for the terminal to perform a mobility operation.

In some embodiments, the first message may include an SN addition request message.

In some embodiments, the first message may be an Xn message.

It should be noted that the first node and the second node are connected via an Xn interface, and the first node sends the first message to the second node via the Xn interface.

In some embodiments, the mobility operation may include various operations related to an update (or change) of a serving cell of the terminal.

In some embodiments, the mobility operation may include various operations related to an update (or change) of the PSCell of the terminal.

In some embodiments, the mobility operation may include an addition operation of the second node or a modification operation of the second node.

In some embodiments, the mobility operation at least one of:
a CPA operation; or
a CPC operation.

In some embodiments, the mobility operation include at least one of:
a mobility operation initiated by the first node; or
a mobility operation initiated by a fourth node.

In some embodiments, the fourth node may include an S-SN, which may be a base station corresponding to a SCell or an SCG.

It may be understood that the fourth node is associated with the SCell of the terminal.

In some embodiments, the first node sending the first message to the second node includes one of:
in response to the first node initiating the addition operation of the second node or the modification operation of the second node, the first node sending the first message to the second node; and
in response to the first node receiving a third message indicating that the fourth node initiates the addition operation of the second node or the modification operation of the second node, the first node sending the first message to the second node.

At step S2202, the second node sends an acknowledge message to the first node.

In some embodiments, the first node receives the acknowledge message sent by the second node.

In some embodiments, the acknowledge message may be an acknowledge message corresponding to the first message.

In some embodiments, the acknowledge message may include a SN addition request acknowledge message.

In some embodiments, the acknowledge message indicates one or more candidate PSCells associated with the second node and having been determined to be configured for the terminal.

It may be understood that after receiving the first message, the second node configures the one or more candidate PSCells for the mobility operation of the terminal, and the second node informs the first node of the one or more candidate PSCells determined to be configured via the acknowledge message.

In some embodiments, the acknowledge message may include at least one of:
cell identity information of the one or more candidate PSCells;
a node ID of a node associated with the one or more candidate PSCells; or
cell frequency point information of the one or more candidate PSCells.

In some embodiments, the cell identity information may include at least one of:
a PCI; or
a CGI.

In some embodiments, the node ID of the node associated with the one or more candidate PSCells may be understood as a base station ID of the node associated with the one or more candidate PSCells.

In some embodiments, the acknowledge message may include a measurement configuration of the one or more candidate PSCells configured by the second node.

In some embodiments, the measurement configuration is associated with a measurement configuration of the MN and/or the SN, in which the MN includes a source MN and/or a current MN, and the SN includes an S-SN.

It should be noted that the measurement configuration of the one or more candidate PSCells configured by the second node is set with reference to the measurement configuration of the MN and/or the SN.

At step S2203, the first node sends a second message to the second node.

In some embodiments, the second node receives the second message sent by the first node.

In some embodiments, the second message carries indication information, in which the indication information is configured for the second node to configure an execution condition for executing the mobility operation.

In some embodiments, the second message is configured for an SN modification for the terminal.

It should be noted that the SN modification for the terminal may be initiated by the MN or the SN, and an SN modification procedure of the terminal is used to modify a current user plane resource configuration or modify other attributes of a terminal context within the same SN.

Here, a user plane resource may include a resource related to a packet data unit (PDU) session, a quality of service (QoS) flow, or a data radio bearer (DRB).

In some embodiments, the second message may include a SN modification request message.

It should be noted that the first node may reuse an existing SN modification request message to send the indication information to the second node. On the one hand, this enables the second node to obtain the one or more candidate PSCells for the mobility operation indicated by the indication information according to the indication information, so that the second node may configure the execution condition for executing the mobility operation for the one or more candidate PSCells. On the other hand, a signaling overhead may be reduced.

In some embodiments, the second message may be an Xn message.

It should be noted that the first node and the second node are connected via the Xn interface, and the first node sends the second message to the second node via the Xn interface.

In some embodiments, the Xn message may carry one or more parameters, where the one or more parameters indicate one or more candidate PSCells for executing the mobility operation.

For example, the Xn message may carry a first parameter, indicating one or more candidate PSCells having been configured for the terminal and one or more candidate PSCells prepared to be configured for the terminal.

For another example, the Xn message may carry at least one of:
a second parameter, indicating the one or more candidate PSCells having been configured for the terminal; or
a third parameter, indicating the one or more candidate PSCells prepared to be configured for the terminal.

In some embodiments, the aforementioned parameters may include at least one of:
the cell identity information of the one or more candidate PSCells;
the node ID of the node associated with the one or more candidate PSCells; or
cell measurement result information of the one or more candidate PSCells.

For example, parameters in the Xn message may include an information list of a set of C-SNs. Information corresponding to each C-SN in the information list includes one or more candidate PSCells corresponding to the C-SN.

In some embodiments, the Xn message may carry one or more indication bits, and the one or more candidate PSCells for the terminal are indicated by different bit values of the one or more indication bits.

In some embodiments, the Xn message includes an inter-node RRC message container.

It should be noted that the Xn message may include one or more first message containers. Each C-SN corresponds to one first message container, and the first message container may be the inter-node RRC message container. It may be understood that the first message container may be configured to carry an inter-node RRC message.

It should be noted that the first message container included in the Xn message is not limited to the aforementioned inter-node RRC message container, but may also include other message containers related to Xn message transmission or contents related to other RRC messages or information.

In some embodiments, the indication information is carried in the inter-node RRC message container.

In some embodiments, the inter-node RRC message container may carry one or more indication bits, and the one or more candidate PSCells for the terminal are indicated by different bit values of the one or more indication bits.

In some embodiments, the inter-node RRC message container further includes: CG-ConfigInfo.

It may be understood that the first message container in the Xn message may be configured to carry CG-ConfigInfo. The indication information is carried in the CG-ConfigInfo.

It should be noted that CG-ConfigInfo is configured to carry configuration information related to a cell or a CG.

In some embodiments, CG-ConfigInfo may include at least one of:
cell configuration information;
a radio bearer configuration;
capability information of the terminal;
a cell measurement report; or
a measurement configuration.

In some embodiments, the inter-node RRC message container may carry one or more parameters, where the one or more parameters indicate the one or more candidate PSCells for executing the mobility operation.

For example, the inter-node RRC message container may carry the first parameter, which indicates one or more candidate PSCells having been configured for the terminal and one or more candidate PSCells prepared to be configured for the terminal.

For another example, the inter-node RRC message container may carry at least one of:
the second parameter, indicating the one or more candidate PSCells having been configured for the terminal; or
the third parameter, indicating the one or more candidate PSCells prepared to be configured for the terminal.

In some embodiments, the aforementioned parameters may include at least one of:
the cell identity information of the one or more candidate PSCells;
the node ID of the node associated with the one or more candidate PSCells; or
the cell measurement result information of the one or more candidate PSCells.

For example, parameters in the inter-node RRC message container may include an NR neighboring cell measurement list.

For another example, the parameters in the inter-node RRC message container may include a cell list of candidate PSCells. The cell list may include frequency information and a candidate PSCell set corresponding to the frequency information.

In some embodiments, the second parameter may be indicated by an RRC reconfiguration message corresponding to the first node. It should be noted that the first node sends, to the second node, configuration information of a conditional reconfiguration configured by the first node for the mobility operation. The configuration information includes the one or more candidate PSCells having been configured for the terminal.

In some embodiments, each RRC message is associated with one C-SN. The RRC message includes one or more candidate PSCells corresponding to the C-SN. The Xn message includes inter-node RRC messages corresponding to a plurality of C-SNs, and the inter-node RRC message includes one or more SCells corresponding to the corresponding SN.

In some embodiments, the Xn message may include a plurality of message containers, and each message container is associated with one C-SN. The message container includes the RRC message corresponding to the associated C-SN. The RRC message includes one or more candidate PSCells having been configured for the terminal and/or prepared to be configured for the terminal by the corresponding C-SN.

In other embodiments, the indication information is carried in any position of the Xn message. For example, the indication information is not carried in the inter-node RRC message container.

It should be noted that the Xn message may include a first message container and a second message container, where the first message container may be the inter-node RRC message container. The second message container is different from the first message container. The indication information may be carried in the second message container.

In some embodiments, the Xn message includes inter-node RRC information.

It should be noted that the Xn message may include one or more pieces of inter-node RRC information, and each C-SN corresponds to one piece of inter-node RRC information. It should be noted that including the inter-node RRC information in the Xn message may be implemented by including information, which is described as an RRC IE, in the Xn message.

In some embodiments, the indication information is carried in the inter-node RRC information.

In some embodiments, the Xn message may include a plurality of message containers, and each message container is associated with one C-SN. The message container includes the inter-node RRC information corresponding to the associated C-SN. The inter-node RRC information includes one or more candidate PSCells having been configured for the terminal and/or prepared to be configured for the terminal by the corresponding C-SN.

In some embodiments, the indication information may include second information, where the second information indicates a second candidate PSCell set. The second candidate PSCell set includes one or more candidate PSCells having been determined to be configured for the terminal.

In some embodiments, the second candidate PSCell set includes at least one of:
all candidate PSCells having been determined to be configured for the terminal; or
one or more candidate PSCells associated with a third node and having been determined to be configured for the terminal, in which the third node is different from the second node.

In some embodiments, all candidate PSCells having been determined to be configured for the terminal may include:
one or more candidate PSCells associated with the second node having been determined to be configured for the terminal, and one or more candidate PSCells associated with the third node having been determined to be configured for the terminal.

In some embodiments, the third node may include the C-SN. The C-SN may be the base station corresponding to the candidate PSCell. In addition, the third node is different from the second node.

In some embodiments, the second candidate PSCell set may further include:
one or more candidate PSCells having been configured for the terminal.

In some embodiments, the second message includes at least one of:
the cell identity information of the one or more candidate PSCells;
the node ID of the node associated with the one or more candidate PSCells;
the cell measurement result information of the one or more candidate PSCells; or
the cell frequency point information of the one or more candidate PSCells.

In some embodiments, the cell measurement result information may include at least one of:
an RSRP;
an RSRQ;
an SINR; or
an RSSI.

In some embodiments, the indication information may further include seventh information.

In some embodiments, the seventh information indicates the second information to be used for obtaining relevant information for the mobility operation.

In some embodiments, the seventh information indicates at least one of:
a mobility operation having been configured for the terminal; or
a mobility operation prepared to be configured for the terminal.

It should be noted that the mobility operation having been configured for the terminal may be understood as that one or more candidate PSCells corresponding to the mobility operation are one or more candidate PSCells having been configured. The one or more candidate PSCells corresponding to the mobility operation may be understood as one or more candidate PSCells prepared to be configured for the terminal.

It should be noted that the embodiments of the disclosure explicitly indicate a configuration status of the mobility operation via the seventh information, so that the second node may quickly and accurately obtain the configuration status of the mobility operation based on the seventh information.

In other embodiments, the first node may indicate the configuration status of the mobility operation to the second node in an implicit manner.

For example, a reserved information field in the first message may be used to implicitly indicate the configuration status of the mobility operation based on whether the reserved information field carries a configuration ID of the mobility operation. It should be noted that the configuration ID refers to an ID corresponding to the mobility operation having been configured, and there is no corresponding configuration ID for the mobility operation prepared to be configured for the terminal. Therefore, the configuration status of the mobility operation may be determined based on whether the reserved information field in the first message carries the configuration ID of the mobility operation.

In some embodiments, the first node sending the second message to the second node includes one of:
in response to the first node initiating the addition operation of the second node or the modification operation of the second node, the first node sending the second message to the second node;
in response to the first node receiving the third message indicating that the fourth node initiates the addition operation of the second node or the modification operation of the second node, the first node sending the second message to the second node;
in response to the first node initiating the addition operation of the third node or the modification operation of the third node, the first node sending the second message to the second node; and
in response to the first node receiving a third message indicating that the fourth node initiates the addition operation of the third node or the modification operation of the third node, the first node sending the second message to the second node.

At step S2204, the second node sends an acknowledge message to the first node.

In some embodiments, the first node receives the acknowledge message sent by the second node.

In some embodiments, the acknowledge message may be the acknowledge message corresponding to the second message.

In some embodiments, the acknowledge message may include a SN modification request acknowledge message.

In some embodiments, the acknowledge message is configured to determine the execution condition of the mobility operations.

It should be noted that the execution condition of the mobility operation may be understood as a condition that the terminal needs to satisfy for adding or changing the candidate PSCell in a case where the PSCell configured by the second node serve as the serving cell of the terminal. Each candidate PSCell associated with the third node corresponds to one execution condition.

The execution condition corresponding to any candidate PSCell associated with the third node may be understood as a condition that the terminal needs to satisfy for switching from the candidate PSCell configured by the second node to the candidate PSCell associated with the third node in a case where the candidate PSCell configured by the second node serves as the serving cell of the terminal.

In some embodiments, the acknowledge message may include the execution condition of the mobility operation.

It should be noted that after receiving the second information in the second message, the second node may configure the execution condition for executing the mobility operation for the terminal according to the one or more candidate PSCells in the second candidate PSCell set indicated by the second information. It may be understood that the acknowledge message carries the execution condition generated by the second node.

In other embodiments, the acknowledge message may include an event type and/or a parameter value corresponding to the execution condition of the mobility operation.

In some embodiments, the event type and/or the parameter value corresponding to the execution condition are configured for the first node and/or the fourth node to generate the execution condition of the mobility operation.

In some embodiments, the first node may generate the execution condition of the mobility operation associated with the second node according to the event type and/or the parameter value corresponding to the execution condition carried in the acknowledge message.

In other embodiments, in a case where the fourth node initiates the mobility operation, the first node may forward the event type and/or parameter value corresponding to the execution condition carried in the acknowledge message to the fourth node, and the fourth node generates the execution condition of the mobility operation associated with the second node.

In some embodiments, the event type of CondEvent corresponding to the execution condition may include at least one of:
CondEvent A3;
CondEvent A4; or
CondEvent A5.

In some embodiments, the parameter value includes at least one of:
an offset;
a threshold value;
a trigger time; or
a hysteresis value.

It should be noted that the parameter value may be understood as the parameter value of an event corresponding to the execution condition, for example, A3 offset; A4 threshold value, A5 threshold value 1, A5 threshold value 2, etc.

In some embodiments, the acknowledge message may be configured to determine an updated measurement configuration of the one or more candidate PSCells configured by the second node.

In some embodiments, the acknowledge message may further include the updated measurement configuration of the one or more candidate PSCells configured by the second node.

In some embodiments, the measurement configuration is associated with the measurement configuration of the MN and/or the SN, in which the MN includes the source MN and/or the current MN, and the SN includes the S-SN and/or the C-SN.

It should be noted that the measurement configuration of the one or more candidate PSCells configured by the second node is set with reference to the measurement configuration of the MN and/or the SN.

In some embodiments, the acknowledge message may include a measurement ID, which indicates the measurement configuration corresponding to the execution condition.

For example, when the measurement ID carried in the acknowledge message indicates that the measurement configuration corresponding to the execution condition is the measurement configuration of the C-SN, it means that the execution condition is generated with reference to the measurement configuration of the C-SN.

For another example, when the measurement ID carried in the acknowledge message indicates that the measurement configuration corresponding to the execution condition is the measurement configuration of the source-SN, it means that the execution condition is generated with reference to the measurement configuration of the source-SN.

For yet another example, when the measurement ID carried in the acknowledge message indicates that the measurement configuration corresponding to the execution condition is the measurement configuration of the source MN, it means that the execution condition is generated with reference to the measurement configuration of the source MN.

At step S2205, the first node determines the execution condition of the mobility operations and/or the measurement configuration of the one or more candidate PSCells configured by the second node and associated with the execution condition.

In some embodiments, the optional implementation of step S2205 may refer to the optional implementation of step S2103 in FIG. 2a and other related parts in the embodiments related to FIG. 2a, which are not repeated herein.

The method for processing information involved in the embodiments of the disclosure may include at least one of steps S2201 to S2205. For example, step S2201 may be implemented as an independent embodiment; for example, step S2201 combined with steps S2202 and S2203 may be implemented as an independent embodiment. For example, step S2201 combined with steps S2202 and S2205 may be implemented as an independent embodiment, but is not limited thereto.

In some embodiments, steps S2202, S2203, S2204 and S2205 are optional, and one or more of these steps may be omitted or replaced in different embodiments. It may be understood that the second node may refuse to configure the one or more candidate PSCells upon receiving the first message, or the second node may refuse to modify the configuration of the one or more candidate PSCells upon receiving the second message. In a case where the first node does not receive the acknowledge message, the first node does not need to perform subsequent processing.

In some embodiments, steps S2203 and S2204 are optional, and one or more of these steps may be omitted or replaced in different embodiments. It may be understood that in a case where the first node sends the first message carrying the first information to the second node, the first node may determine the execution condition and the measurement configuration of the one or more candidate PSCells configured by the second node according to the acknowledge message of the first message returned by the second node, without a need for the first node to send the second message to the second node again, nor for the second node to return the acknowledge message of the second message.

FIG. 2c is an interaction diagram of a method for processing information according to an embodiment of the disclosure. As shown in FIG. 2c, the embodiment of the disclosure relates to a method for processing information applied to the communication system 100, the method includes the following steps.

At step S2301, a first node sends a first message to a second node.

In some embodiments, the second node receives the first message sent by the first node.

In some embodiments, the first node may include an MN. The MN may be an access network device corresponding to a PCell or an MCG.

It may be understood that the first node is associated with the PCell of a terminal. Specifically, the PCell of the terminal is a cell of the first node.

In some embodiments, the second node may include a C-SN. The C-SN may be a base station corresponding to a candidate PSCell. The C-SN may serve as an alternative node of an SN of the terminal. The C-SN may provide a candidate SCell for the terminal, and the candidate SCell may be referred to as a SCell of the terminal subsequently.

It may be understood that the second node is associated with one or more candidate PSCells of the terminal. Specifically, one or more cells of the second node may serve as the one or more candidate PSCells of the terminal. A candidate PSCell may serve as a PSCell of the terminal subsequently.

In some embodiments, the terminal may be a terminal supporting DC, multi-connectivity, or CA.

In some embodiments, the first node sends the first message to a plurality of C-SNs of the terminal.

In some embodiments, the first message may carry indication information, in which the indication information is configured for the second node to configure an execution condition for executing a mobility operation.

In some embodiments, the first message is configured for an SN addition for the terminal.

In some embodiments, the first message may include an SN addition request message.

It should be noted that the first node may reuse an existing SN addition request message to send the indication information to the second node. On the one hand, this enables the second node to obtain one or more candidate PSCells for the mobility operation indicated by the indication information according to the indication information, so that the second node may configure the execution condition for executing the mobility operation for the one or more candidate PSCells. On the other hand, a signaling overhead may be reduced.

In some embodiments, the first message may be an Xn message.

It should be noted that the first node and the second node are connected via an Xn interface, and the first node sends the first message to the second node via the Xn interface.

In some embodiments, the Xn message may carry one or more parameters, where the one or more parameters indicate the one or more candidate PSCells for executing the mobility operation.

For example, the Xn message may carry a first parameter, which indicates one or more candidate PSCells having been configured for the terminal and one or more candidate PSCells prepared to be configured for the terminal.

For another example, the Xn message may carry at least one of:
a second parameter, indicating the one or more candidate PSCells having been configured for the terminal; or
a third parameter, indicating the one or more candidate PSCells prepared to be configured for the terminal.

In some embodiments, the aforementioned parameters may include at least one of:
cell identity information of the one or more candidate PSCells;
a node ID of a node associated with the one or more candidate PSCells; or
cell measurement result information of the one or more candidate PSCells.

For example, parameters in the Xn message may include an information list of a set of C-SNs. Information corresponding to each C-SN in the information list includes one or more candidate PSCells corresponding to the C-SN.

In some embodiments, the Xn message may carry one or more indication bits, and the one or more candidate PSCells for the terminal are indicated by different bit values of the one or more indication bits.

In some embodiments, the Xn message includes an inter-node RRC message container.

It should be noted that the Xn message may include one or more first message containers. Each C-SN corresponds to one first message container, and the first message container may be the inter-node RRC message container. It may be understood that the first message container may be configured to carry an inter-node RRC message.

It should be noted that the first message container included in the Xn message is not limited to the aforementioned inter-node RRC message container, but may also include other message containers related to Xn message transmission or contents related to other RRC messages or information.

In some embodiments, the indication information is carried in the inter-node RRC message container.

In some embodiments, the inter-node RRC message container may carry one or more indication bits, and the one or more candidate PSCells for the terminal are indicated by different bit values of the one or more indication bits.

In some embodiments, the inter-node RRC message container further includes: CG-ConfigInfo.

It may be understood that the first message container in the Xn message may be configured to carry CG-ConfigInfo. The indication information is carried in the CG-ConfigInfo.

It should be noted that CG-ConfigInfo is configured to carry configuration information related to a cell or a CG.

In some embodiments, CG-ConfigInfo may include at least one of:
cell configuration information;
a radio bearer configuration;
capability information of the terminal;
a cell measurement report; or
a measurement configuration.

In some embodiments, the inter-node RRC message container may carry one or more parameters, where the one or more parameters indicate the one or more candidate PSCells for executing the mobility operation.

For example, the inter-node RRC message container may carry the first parameter, which indicates one or more candidate PSCells having been configured for the terminal and one or more candidate PSCells prepared to be configured for the terminal.

For another example, the inter-node RRC message container may carry at least one of:
the second parameter, indicating the one or more candidate PSCells having been configured for the terminal; or
the third parameter, indicating the one or more candidate PSCells prepared to be configured for the terminal.

In some embodiments, the aforementioned parameters may include at least one of:
the cell identity information of the one or more candidate PSCells;
the node ID of the node associated with the one or more candidate PSCells; or
the cell measurement result information of the one or more candidate PSCells.

For example, parameters in the inter-node RRC message container may include an NR neighboring cell measurement list.

For another example, the parameters in the inter-node RRC message container may include a cell list of candidate PSCells. The cell list may include frequency information and a candidate PSCell set corresponding to the frequency information.

In some embodiments, the second parameter may be indicated by an RRC reconfiguration message corresponding to the first node. It should be noted that the first node sends, to the second node, configuration information of a conditional reconfiguration configured by the first node for the mobility operation. The configuration information includes the one or more candidate PSCells having been configured for the terminal.

In some embodiments, each RRC message is associated with one C-SN. The RRC message includes one or more candidate PSCells corresponding to the C-SN. The Xn message includes inter-node RRC messages corresponding to a plurality of C-SNs, and the inter-node RRC message includes one or more SCells corresponding to the corresponding SN.

In some embodiments, the Xn message may include a plurality of message containers, and each message container is associated with one C-SN. The message container includes the RRC message corresponding to the associated C-SN. The RRC message includes one or more candidate PSCells having been configured for the terminal and/or prepared to be configured for the terminal by the corresponding C-SN.

In other embodiments, the indication information is carried in any position of the Xn message. For example, the indication information is not carried in the inter-node RRC message container.

It should be noted that the Xn message may include a first message container and a second message container, where the first message container may be the inter-node RRC message container. The second message container is different from the first message container. The indication information may be carried in the second message container.

In some embodiments, the Xn message includes inter-node RRC information.

It should be noted that the Xn message may include one or more pieces of inter-node RRC information, and each C-SN corresponds to one piece of inter-node RRC information. It should be noted that including the inter-node RRC information in the Xn message may be implemented by including information, which is described as an RRC IE, in the Xn message.

In some embodiments, the indication information is carried in the inter-node RRC information.

In some embodiments, the Xn message may include a plurality of message containers, and each message container is associated with one C-SN. The message container includes the inter-node RRC information corresponding to the associated C-SN. The inter-node RRC information includes one or more candidate PSCells having been configured for the terminal and/or prepared to be configured for the terminal by the corresponding C-SN.

In some embodiments, the mobility operation may include various operations related to an update (or change) of a serving cell of the terminal.

In some embodiments, the mobility operation may include various operations related to an update (or change) of the PSCell of the terminal.

In some embodiments, the mobility operation may include an addition operation of the second node or a modification operation of the second node.

In some embodiments, the mobility operation at least one of:
a CPA operation; or
a CPC operation.

In some embodiments, the mobility operation include at least one of:
a mobility operation initiated by the first node; or
a mobility operation initiated by a fourth node.

In some embodiments, the fourth node may include an S-SN, which may be a base station corresponding to a SCell or an SCG.

It may be understood that the fourth node is associated with the SCell of the terminal.

In some embodiments, the first node sending the first message to the second node includes one of:
in response to the first node initiating the addition operation of the second node or the modification operation of the second node, the first node sending the first message to the second node; and
in response to the first node receiving a third message indicating that the fourth node initiates the addition operation of the second node or the modification operation of the second node, the first node sending the first message to the second node.

In some embodiments, the first message may carry third information. The third information indicates a third candidate PSCells set, and the third candidate PSCells set includes one or more candidate PSCells currently having been determined to be configured for the terminal.

It may be understood that the indication information includes the third information. The "one or more candidate PSCells currently having been determined to be configured for the terminal" may be understood as one or more candidate PSCells having been determined to be configured for the terminal at a current moment.

In some embodiments, the third candidate PSCells set may include at least one of:
all candidate PSCells currently having been determined to be configured for the terminal; or
one or more candidate PSCells associated with a third node and currently having been determined to be configured for the terminal, where the third node is different from the second node.

In some embodiments, all candidate PSCells currently having been determined to be configured for the terminal include:
one or more candidate PSCells associated with the second node and currently having been determined to be configured for the terminal, and one or more candidate PSCells associated with the third node and currently having been determined to be configured for the terminal.

In some embodiments, the third node may include the C-SN. The C-SN may be the base station corresponding to the candidate PSCell. In addition, the third node is different from the second node.

In some embodiments, the third candidate PSCells set may further include:
one or more candidate PSCells having been configured for the terminal.

In some embodiments, the indication information includes at least one of:
the cell identity information of the one or more candidate PSCells;
the node ID of the node associated with the one or more candidate PSCells;
the cell measurement result information of the one or more candidate PSCells; or
cell frequency point information of the one or more candidate PSCells.

In some embodiments, the cell identity information may include at least one of:
a PCI; or
a CGI.

In some embodiments, the node ID of the node associated with the one or more candidate PSCells may be understood as a base station ID of the node associated with the one or more candidate PSCells.

In some embodiments, the cell measurement result information may include at least one of:
an RSRP;
an RSRQ;
an SINR; or
an RSSI.

In some embodiments, the indication information may further include seventh information.

In some embodiments, the seventh information indicates relevant information for obtaining the mobility operation.

In some embodiments, the seventh information indicates at least one of:
a mobility operation having been configured for the terminal; or
a mobility operation prepared to be configured for the terminal.

It should be noted that the mobility operation having been configured for the terminal may be understood as that one or more candidate PSCells corresponding to the mobility operation are one or more candidate PSCells having been configured. The one or more candidate PSCells corresponding to the mobility operation may be understood as one or more candidate PSCells prepared to be configured for the terminal.

At step S2302, the second node sends an acknowledge message to the first node.

In some embodiments, for optional implementations of step S2302, reference may be made to the optional implementations of step S2202 in FIG. 2b and other relevant parts in the embodiments related to FIG. 2b, which are not repeated herein.

At step S2303, the first node sends a second message to the second node.

In some embodiments, the second node receives the second message sent by the first node.

In some embodiments, the second message carries indication information, in which the indication information is configured for the second node to configure the execution condition for executing the mobility operation.

In some embodiments, the second message is configured for an SN modification for the terminal.

In some embodiments, the second message may include a SN modification request message.

It should be noted that the first node may reuse an existing SN modification request message to send the indication information to the second node. On the one hand, this enables the second node to obtain the one or more candidate PSCells for the mobility operation indicated by the indication information according to the indication information, so that the second node may configure the execution condition for executing the mobility operation for the one or more candidate PSCells. On the other hand, a signaling overhead may be reduced.

In some embodiments, the second message may be an Xn message.

In some embodiments, the Xn message includes the inter-node RRC message container.

It should be noted that the Xn message may include one or more first message containers. Each C-SN corresponds to one first message container, and the first message container may be the inter-node RRC message container. It may be understood that the first message container may be configured to carry the inter-node RRC message.

In some embodiments, the indication information is carried in the inter-node RRC message container.

In some embodiments, the inter-node RRC message container further includes: CG-ConfigInfo.

It may be understood that the first message container in the Xn message may be configured to carry CG-ConfigInfo. The indication information is carried in the CG-ConfigInfo.

In other embodiments, the indication information is carried in any position of the Xn message.

It should be noted that the Xn message may include the first message container and the second message container, where the first message container may be the inter-node RRC message container. The second message container is different from the first message container. The indication information may be carried in the second message container.

In some embodiments, the second message carries fourth information. The fourth information indicates a fourth candidate PSCells set. The fourth candidate PSCells set includes one or more candidate PSCells having been determined to be additionally configured for the terminal.

It should be noted that the indication information may include the fourth information; the fourth candidate PSCells set may be understood as a set obtained by adding one or more newly determined candidate PSCells to be configured for the terminal on the basis of the one or more candidate PSCells indicated by the third candidate PSCells set.

It should be noted that when the first node sends the first message containing the third information to the second node, considering that as the terminal moves, the C-SN(s) of the terminal and candidate PSCell(s) determined to be configured by the C-SN(s) may change. On this basis, to ensure a communication stability of the terminal, the first node may send the second message containing the fourth information to the second node, so that the second node may configure the corresponding execution condition for the one or more candidate PSCells having been determined to be additionally configured for the terminal.

In some embodiments, the first node sending the second message to the second node includes one of:
in response to the first node initiating the addition operation of the second node or the modification operation of the second node, the first node sending the second message to the second node;
in response to the first node receiving the third message indicating that the fourth node initiates the addition operation of the second node or the modification operation of the second node, the first node sending the second message to the second node;
in response to the first node initiating the addition operation of the third node or the modification operation of the third node, the first node sending the second message to the second node; and
in response to the first node receiving a third message indicating that the fourth node initiates the addition operation of the third node or the modification operation of the third node, the first node sending the second message to the second node.

At step S2304, the second node sends an acknowledge message to the first node.

In some embodiments, for optional implementations of step S2304, reference may be made to the optional implementations of step S2204 in FIG. 2b and other relevant parts in the embodiments related to FIG. 2b, which are not repeated herein.

At step S2305, the first node determines the execution condition of the mobility operations and/or the measurement configuration of the one or more candidate PSCells configured by the second node and associated with the execution condition.

In some embodiments, for optional implementations of step S2305, reference may be made to the optional implementations of step S2103 in FIG. 2a and other relevant parts in the embodiments related to FIG. 2a, which are not repeated herein.

The method for processing information involved in the embodiments of the disclosure may include at least one of steps S2301 to S2305. For example, step S2301 may be implemented as an independent embodiment; for example, step S2301 combined with steps S2302, S2303 and S2305 may be implemented as an independent embodiment; for example, step S2301 combined with steps S2302 and S2305 may be implemented as an independent embodiment, but is not limited thereto.

In some embodiments, steps S2302, S2303, S2304 and S2305 are optional, and one or more of these steps may be omitted or replaced in different embodiments. It may be understood that the second node can refuse to configure the one or more candidate PSCells in a case of receiving the first message carrying the third information, and the first node does not need to perform the subsequent processing. Alternatively, the second node e can refuse to modify the configuration of the one or more candidate PSCells in a case of receiving the second message carrying the fourth information, and the first node may directly determine the execution condition of the mobility operation and/or the measurement configuration based on the acknowledge message of the first message.

In some embodiments, steps S2303 and S2304 are optional, and one or more of these steps may be omitted or replaced in different embodiments. It may be understood that in a case where the C-SN(s) and the candidate PSCell(s) configured by the C-SN(s) remain unchanged, or in a case where the candidate PSCell(s) determined to be configured by the C-SN(s) are the same as the candidate PSCell(s) prepared to be configured for the terminal by the first node or the fourth node, then when the first node sends the first message carrying the first information to the second node, the first node may determine the execution condition and the measurement configuration of the one or more candidate PSCells configured by the second node according to the acknowledge message of the first message returned by the second node. There is no need for the first node to send the second message to the second node again, nor for the second node to return the acknowledge message of the second message.

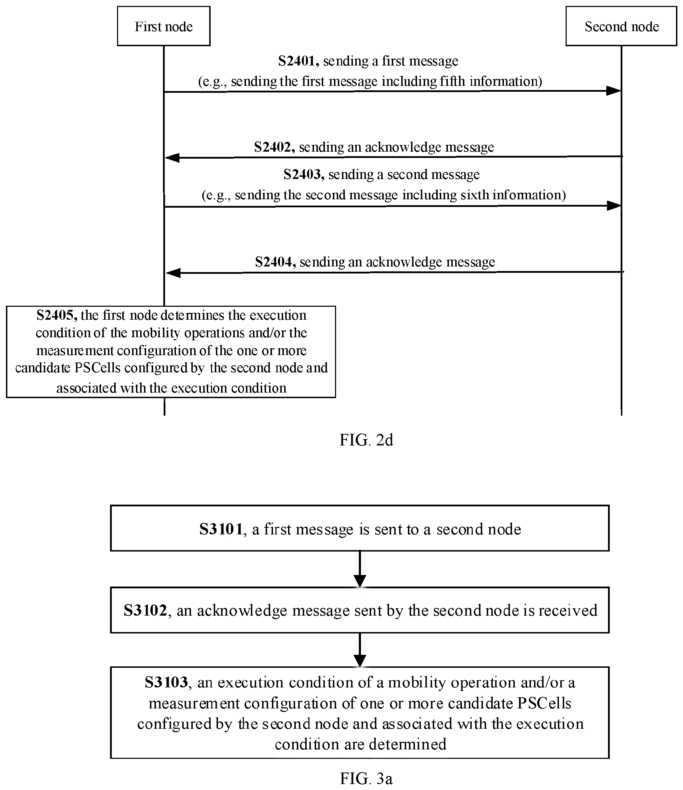

FIG. 2d is an interaction diagram of a method for processing information according to an embodiment of the disclosure. As shown in FIG. 2d, the embodiment of the disclosure relates to a method for processing information applied to the communication system 100, the method includes the following steps.

At step S2401, a first node sends a first message to a second node.

In some embodiments, the second node receives the first message sent by the first node.

In some embodiments, the first node may include an MN. The MN may be an access network device corresponding to a PCell or an MCG.

It may be understood that the first node is associated with the PCell of a terminal. Specifically, the PCell of the terminal is a cell of the first node.

In some embodiments, the second node may include a C-SN. The C-SN may be a base station corresponding to a candidate PSCell. The C-SN may serve as an alternative node of an SN of the terminal. The C-SN may provide a candidate SCell for the terminal, and the candidate SCell may be referred to as a SCell of the terminal subsequently.

It may be understood that the second node is associated with one or more candidate PSCells of the terminal. Specifically, one or more cells of the second node may serve as the one or more candidate PSCells of the terminal. A candidate PSCell may serve as a PSCell of the terminal subsequently.

In some embodiments, the terminal may be a terminal supporting DC, multiconnectivity, or CA.

In some embodiments, the first node sends the first message to a plurality of C-SNs of the terminal.

In some embodiments, the first message may carry indication information, in which the indication information is configured for the second node to configure an execution condition for executing a mobility operation.

In some embodiments, the first message is configured for an SN addition for the terminal.

In some embodiments, the first message may include an SN addition request message.

It should be noted that the first node may reuse an existing SN addition request message to send the indication information to the second node. On the one hand, this enables the second node to obtain one or more candidate PSCells for the mobility operation indicated by the indication information according to the indication information, so that the second node may configure the execution condition for executing the mobility operation for the one or more candidate PSCells. On the other hand, a signaling overhead may be reduced.

In some embodiments, the first message may be an Xn message.

It should be noted that the first node and the second node are connected via an Xn interface, and the first node sends the first message to the second node via the Xn interface.

In some embodiments, the Xn message may carry one or more parameters, where the one or more parameters indicate the one or more candidate PSCells for executing the mobility operation.

For example, the Xn message may carry a first parameter, which indicates one or more candidate PSCells having been configured for the terminal and one or more candidate PSCells prepared to be configured for the terminal.

For another example, the Xn message may carry at least one of:
a second parameter, indicating the one or more candidate PSCells having been configured for the terminal; or
a third parameter, indicating the one or more candidate PSCells prepared to be configured for the terminal.

In some embodiments, the aforementioned parameters may include at least one of:
cell identity information of the one or more candidate PSCells;
a node ID of a node associated with the one or more candidate PSCells; or
cell measurement result information of the one or more candidate PSCells.

For example, parameters in the Xn message may include an information list of a set of C-SNs. Information corresponding to each C-SN in the information list includes one or more candidate PSCells corresponding to the C-SN.

In some embodiments, the Xn message may carry one or more indication bits, and the one or more candidate PSCells for the terminal are indicated by different bit values of the one or more indication bits.

In some embodiments, the Xn message includes an inter-node RRC message container.

It should be noted that the Xn message may include one or more first message containers. Each C-SN corresponds to one first message container, and the first message container may be the inter-node RRC message container. It may be understood that the first message container may be configured to carry an inter-node RRC message.

It should be noted that the first message container included in the Xn message is not limited to the aforementioned inter-node RRC message container, but may also include other message containers related to Xn message transmission.

In some embodiments, the indication information is carried in the inter-node RRC message container.

In some embodiments, the inter-node RRC message container may carry one or more indication bits, and the one or more candidate PSCells for the terminal are indicated by different bit values of the one or more indication bits.

In some embodiments, the inter-node RRC message container further includes: CG-ConfigInfo.

It may be understood that the first message container in the Xn message may be configured to carry CG-ConfigInfo. The indication information is carried in the CG-ConfigInfo.

It should be noted that CG-ConfigInfo is configured to carry configuration information related to a cell or a CG.

In some embodiments, CG-ConfigInfo may include at least one of:
cell configuration information;
a radio bearer configuration;
capability information of the terminal;
a cell measurement report; or
a measurement configuration.

In some embodiments, the inter-node RRC message container may carry one or more parameters, where the one or more parameters indicate the one or more candidate PSCells for executing the mobility operation.

For example, the inter-node RRC message container may carry the first parameter, which indicates one or more candidate PSCells having been configured for the terminal and one or more candidate PSCells prepared to be configured for the terminal.

For another example, the inter-node RRC message container may carry at least one of:
the second parameter, indicating the one or more candidate PSCells having been configured for the terminal; or
the third parameter, indicating the one or more candidate PSCells prepared to be configured for the terminal.

In some embodiments, the aforementioned parameters may include at least one of:
the cell identity information of the one or more candidate PSCells;
the node ID of the node associated with the one or more candidate PSCells; or
the cell measurement result information of the one or more candidate PSCells.

For example, parameters in the inter-node RRC message container may include an NR neighboring cell measurement list.

For another example, the parameters in the inter-node RRC message container may include a cell list of candidate PSCells. The cell list may include frequency information and a candidate PSCell set corresponding to the frequency information.

In some embodiments, the second parameter may be indicated by an RRC reconfiguration message corresponding to the first node. It should be noted that the first node sends, to the second node, configuration information of a conditional reconfiguration configured by the first node for the mobility operation. The configuration information includes the one or more candidate PSCells having been configured for the terminal.

In other embodiments, the indication information is carried in any position of the Xn message. For example, the indication information is not carried in the inter-node RRC message container.

It should be noted that the Xn message may include a first message container and a second message container, where the first message container may be the inter-node RRC message container. The second message container is different from the first message container. The indication information may be carried in the second message container.

In some embodiments, the mobility operation may include various operations related to an update (or change) of a serving cell of the terminal.

In some embodiments, the mobility operation may include various operations related to an update (or change) of the PSCell of the terminal.

In some embodiments, the mobility operation may include an addition operation of the second node or a modification operation of the second node.

In some embodiments, the mobility operation at least one of:
a CPA operation; or
a CPC operation.

In some embodiments, the mobility operation include at least one of:
a mobility operation initiated by the first node; or
a mobility operation initiated by a fourth node.

In some embodiments, the fourth node may include an S-SN, which may be a base station corresponding to a SCell or an SCG.

It may be understood that the fourth node is associated with the SCell of the terminal.

In some embodiments, the first node sending the first message to the second node includes one of:
in response to the first node initiating the addition operation of the second node or the modification operation of the second node, the first node sending the first message to the second node; and
in response to the first node receiving a third message indicating that the fourth node initiates the addition operation of the second node or the modification operation of the second node, the first node sending the first message to the second node.

In some embodiments, the first message may carry fifth information. The fifth information indicates a first candidate PSCell set, in which the first candidate PSCell set includes one or more candidate PSCells prepared to be configured for the terminal. It may be understood that the indication information includes the fifth information.

In some embodiments, the first candidate PSCell set may include at least one of:
all candidate PSCells prepared to be configured for the terminal; or
one or more candidate PSCells associated with a third node and prepared to be configured for the terminal, in which the third node is different from the second node.

In some embodiments, all candidate PSCells prepared to be configured for the terminal may include:
one or more candidate PSCells associated with the second node and prepared to be configured for the terminal, and one or more candidate PSCells associated with the third node and prepared to be configured for the terminal.

In some embodiments, the first candidate PSCell set may further include:
one or more candidate PSCells having been configured for the terminal.

In some embodiments, the first node initiates the addition operation of the second node or the modification operation of the second node, and the first candidate PSCell set is determined by the first node.

In other embodiments, the fourth node initiates the addition operation of the second node or the modification operation of the second node, and the first candidate PSCell set is determined by the third message.

In some embodiments, the indication information includes at least one of:
the cell identity information of the one or more candidate PSCells;
the node ID of the node associated with the one or more candidate PSCells;
the cell measurement result information of the one or more candidate PSCells; or
cell frequency point information of the one or more candidate PSCells.

In some embodiments, the cell identity information may include at least one of:
a PCI; or
a CGI.

In some embodiments, the node ID of the node associated with the one or more candidate PSCells may be understood as a base station ID of the node associated with the one or more candidate PSCells.

In some embodiments, the cell measurement result information may include at least one of:
an RSRP;
an RSRQ;
an SINR; or
an RSSI.

In some embodiments, the indication information may further include seventh information.

In some embodiments, the seventh information indicates relevant information for obtaining the mobility operation.

In some embodiments, the seventh information indicates at least one of:
a mobility operation having been configured for the terminal; or
a mobility operation prepared to be configured for the terminal.

It should be noted that the mobility operation having been configured for the terminal may be understood as that one or more candidate PSCells corresponding to the mobility operation are one or more candidate PSCells having been configured. The one or more candidate PSCells corresponding to the mobility operation may be understood as one or more candidate PSCells prepared to be configured for the terminal.

At step S2302, the second node sends an acknowledge message to the first node.

In some embodiments, for optional implementations of step S2302, reference may be made to the optional implementations of step S2202 in FIG. 2b and other relevant parts in the embodiments related to FIG. 2b, which are not repeated herein.

At step S2303, the first node sends a second message to the second node.

In some embodiments, the second node receives the second message sent by the first node.

In some embodiments, the second message carries indication information, in which the indication information is configured for the second node to configure the execution condition for executing the mobility operation.

In some embodiments, the second message is configured for an SN modification for the terminal.

In some embodiments, the second message may include a SN modification request message.

It should be noted that the first node may reuse an existing SN modification request message to send the indication information to the second node. On the one hand, this enables the second node to obtain the one or more candidate PSCells for the mobility operation indicated by the indication information according to the indication information, so that the second node may configure the execution condition for executing the mobility operation for the one or more candidate PSCells. On the other hand, a signaling overhead may be reduced.

In some embodiments, the second message may be an Xn message.

In some embodiments, the Xn message includes the inter-node RRC message container.

It should be noted that the Xn message may include one or more first message containers. Each C-SN corresponds to one first message container, and the first message container may be the inter-node RRC message container. It may be understood that the first message container may be configured to carry the inter-node RRC message.

In some embodiments, the indication information is carried in the inter-node RRC message container.

In some embodiments, the inter-node RRC message container further includes: CG-ConfigInfo.

It may be understood that the first message container in the Xn message may be configured to carry CG-ConfigInfo. The indication information is carried in the CG-ConfigInfo.

In other embodiments, the indication information is carried in any position of the Xn message.

It should be noted that the Xn message may include the first message container and the second message container, where the first message container may be the inter-node RRC message container. The second message container is different from the first message container. The indication information may be carried in the second message container.

In some embodiments, the second message carries sixth information. The sixth information indicates difference information between the first candidate PSCell set and a second candidate PSCell set, in which the second candidate PSCell set includes one or more candidate PSCells having been determined to be configured for the terminal

It should be noted that in a case where the first node sends the first message containing the fifth information to the second node, considering that one or more candidate PSCells determined to be configured by the C-SN(s) are different from one or more candidate PSCells to be configured for the terminal by the network device, on this basis, to ensure the mobility operation of the terminal, the first node may send the second message containing the sixth information to the second node, so that the second node may obtain the difference information between the first candidate PSCell set and the second candidate PSCell set according to the sixth information, and then update the execution condition for the terminal to execute the mobility operation and/or the measurement configuration of the one or more candidate PSCells configured by the second node.

In some embodiments, the first node sending the second message to the second node includes one of:
in response to the first node initiating the addition operation of the second node or the modification operation of the second node, the first node sending the second message to the second node;
in response to the first node receiving the third message indicating that the fourth node initiates the addition operation of the second node or the modification operation of the second node, the first node sending the second message to the second node;
in response to the first node initiating the addition operation of the third node or the modification operation of the third node, the first node sending the second message to the second node; and
in response to the first node receiving a third message indicating that the fourth node initiates the addition operation of the third node or the modification operation of the third node, the first node sending the second message to the second node.

At step S2304, the second node sends an acknowledge message to the first node.

In some embodiments, for optional implementations of step S2304, reference may be made to the optional implementations of step S2204 in FIG. 2b and other relevant parts in the embodiments related to FIG. 2b, which are not repeated herein.

At step S2305, the first node determines the execution condition of the mobility operations and/or the measurement configuration of the one or more candidate PSCells configured by the second node and associated with the execution condition.

In some embodiments, for optional implementations of step S2305, reference may be made to the optional implementations of step S2103 in FIG. 2a and other relevant parts in the embodiments related to FIG. 2a, which are not repeated herein.

The method for processing information involved in the embodiments of the disclosure may include at least one of steps S2401 to S2405. For example, step S2401 may be implemented as an independent embodiment; for example, step S2401 combined with steps S2402, S2403 and S2405 may be implemented as an independent embodiment; for example, step S2401 combined with steps S2402 and S2405 may be implemented as an independent embodiment, but is not limited thereto.

In some embodiments, steps S2402, S2403, S2404 and S2405 are optional, and one or more of these steps may be omitted or replaced in different embodiments. It may be understood that the second node can refuse to configure the one or more candidate PSCells in a case of receiving the first message carrying the third information, and the first node does not need to perform the subsequent processing. Alternatively, the second node e can refuse to modify the configuration of the one or more candidate PSCells in a case of receiving the second message carrying the fourth information, and the first node may directly determine the execution condition of the mobility operation and/or the measurement configuration based on the acknowledge message of the first message.

In some embodiments, steps S2403 and S2404 are optional, and one or more of these steps may be omitted or replaced in different embodiments. It may be understood that in a case where the C-SN(s) and the candidate PSCell(s) configured by the C-SN(s) remain unchanged, or in a case where the candidate PSCell(s) determined to be configured by the C-SN(s) are the same as the candidate PSCell(s) prepared to be configured for the terminal by the first node or the fourth node, then when the first node sends the first message carrying the first information to the second node, the first node may determine the execution condition and the measurement configuration of the one or more candidate PSCells configured by the second node according to the acknowledge message of the first message returned by the second node. There is no need for the first node to send the second message to the second node again, nor for the second node to return the acknowledge message of the second message.

FIG. 3a is a schematic flowchart of a method for processing information according to an embodiment of the disclosure. As shown in FIG. 3a, the embodiment of the disclosure relates to a method for processing information executed by a first node, and the method includes the following steps.

At step S3101, a first message is sent to a second node.

In some embodiments, for optional implementations of step S3101, reference may be made to the optional implementations of step S2101 in FIG. 2a and other relevant parts in the embodiments related to FIG. 2a, which are not repeated herein.

At step S3102, an acknowledge message sent by the second node is received.

In some embodiments, for optional implementations of step S3102, reference may be made to the optional implementations of step S2102 in FIG. 2a and other relevant parts in the embodiments related to FIG. 2a, which are not repeated herein.

At step S3103, an execution condition of a mobility operation and/or a measurement configuration of one or more candidate PSCells configured by the second node and associated with the execution condition are determined.

In some embodiments, for optional implementations of step S3103, reference may be made to the optional implementations of step S2103 in FIG. 2a and other relevant parts in the embodiments related to FIG. 2a, which are not repeated herein.

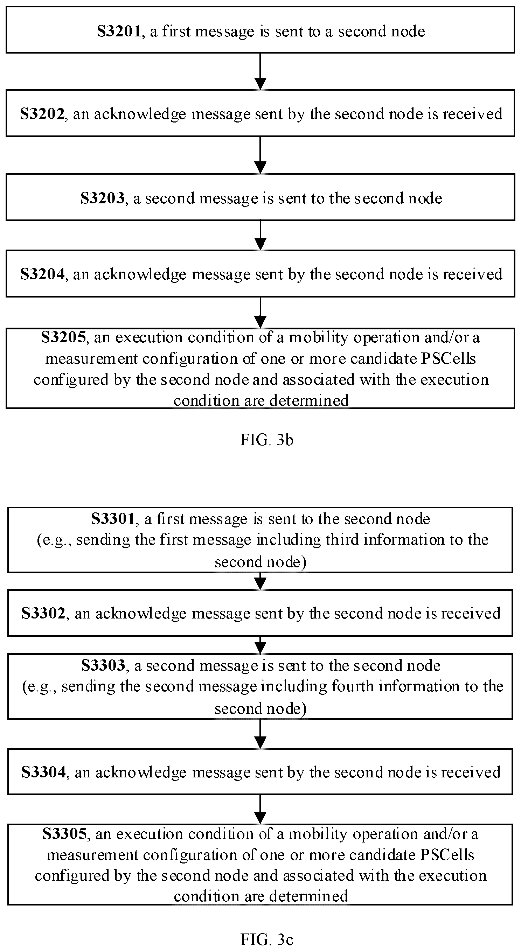

FIG. 3b is a schematic flowchart of a method for processing information according to an embodiment of the disclosure. As shown in FIG. 3b, the embodiment of the disclosure relates to a method for processing information executed by a first node, and the method includes the following steps.

At step S3201, a first message is sent to a second node.

In some embodiments, for optional implementations of step S3201, reference may be made to the optional implementations of step S2201 in FIG. 2b and other relevant parts in the embodiments related to FIG. 2b, which are not repeated herein.

At step S3202, an acknowledge message sent by the second node is received.

In some embodiments, for optional implementations of step S3202, reference may be made to the optional implementations of step S2202 in FIG. 2b and other relevant parts in the embodiments related to FIG. 2b, which are not repeated herein.

At step S3203, a second message is sent to the second node.

In some embodiments, for optional implementations of step S3203, reference may be made to the optional implementations of step S2203 in FIG. 2b and other relevant parts in the embodiments related to FIG. 2b, which are not repeated herein.

At step S3204, an acknowledge message sent by the second node is received.

In some embodiments, for optional implementations of step S3204, reference may be made to the optional implementations of step S2204 in FIG. 2b and other relevant parts in the embodiments related to FIG. 2b, which are not repeated herein.

At step S3205, an execution condition of a mobility operation and/or a measurement configuration of one or more candidate PSCells configured by the second node and associated with the execution condition are determined.

In some embodiments, for optional implementations of step S3205, reference may be made to the optional implementations of step S2103 in FIG. 2a and other relevant parts in the embodiments related to FIG. 2a, which are not repeated herein.

The method for processing information involved in the embodiments of the disclosure may include at least one of steps S3201 to S3205. For example, step S3201 combined with steps S3202 and S3205 may be implemented as an independent embodiment, but is not limited thereto.

In some embodiments, steps S3203 and S3204 are optional, and one or more of these steps may be omitted or replaced in different embodiments. It may be understood that in a case where the first node sends the first message carrying the first information to the second node, the first node may determine the execution condition and the measurement configuration of the one or more candidate PSCells configured by the second node according to the acknowledge message of the first message returned by the second node, without a need for the first node to send the second message to the second node again, nor for the second node to return the acknowledge message of the second message.

FIG. 3c is a schematic flowchart of a method for processing information according to an embodiment of the disclosure. As shown in FIG. 3c, the embodiment of the disclosure relates to a method for processing information executed by a first node, and the method includes the following steps.

At step S3301, a first message is sent to a second node.

In some embodiments, for optional implementations of step S3301, reference may be made to the optional implementations of step S2301 in FIG. 2c and other relevant parts in the embodiments related to FIG. 2c, which are not repeated herein.

At step S3302, an acknowledge message sent by the second node is received.

In some embodiments, for optional implementations of step S3302, reference may be made to the optional implementations of step S2202 in FIG. 2b and other relevant parts in the embodiments related to FIG. 2b, which are not repeated herein.

At step S3303, a second message is sent to the second node.

In some embodiments, for optional implementations of step S3303, reference may be made to the optional implementations of step S2303 in FIG. 2c and other relevant parts in the embodiments related to FIG. 2c, which are not repeated herein.

At step S3304, an acknowledge message sent by the second node is received.

In some embodiments, for optional implementations of step S3304, reference may be made to the optional implementations of step S2204 in FIG. 2b and other relevant parts in the embodiments related to FIG. 2b, which are not repeated herein.

At step S3305, an execution condition of a mobility operation and/or a measurement configuration of one or more candidate PSCells configured by the second node and associated with the execution condition are determined.

In some embodiments, for optional implementations of step S3305, reference may be made to the optional implementations of step S2205 in FIG. 2b and other relevant parts in the embodiments related to FIG. 2b, which are not repeated herein.

The method for processing information involved in the embodiments of the disclosure may include at least one of steps S3301 to S3305. For example, step S3301 combined with steps S3302 and S3305 may be implemented as an independent embodiment, but is not limited thereto.

In some embodiments, steps S3303 and S3304 are optional, and one or more of these steps may be omitted or replaced in different embodiments. It may be understood that in a case where the C-SN(s) and the candidate PSCell(s) configured by the C-SN(s) remain unchanged, or in a case where the candidate PSCell(s) determined to be configured by the C-SN(s) are the same as the candidate PSCell(s) prepared to be configured for the terminal by the first node or the fourth node, then when the first node sends the first message carrying the first information to the second node, the first node may determine the execution condition and the measurement configuration of the one or more candidate PSCells configured by the second node according to the acknowledge message of the first message returned by the second node. There is no need for the first node to send the second message to the second node again, nor for the second node to return the acknowledge message of the second message.

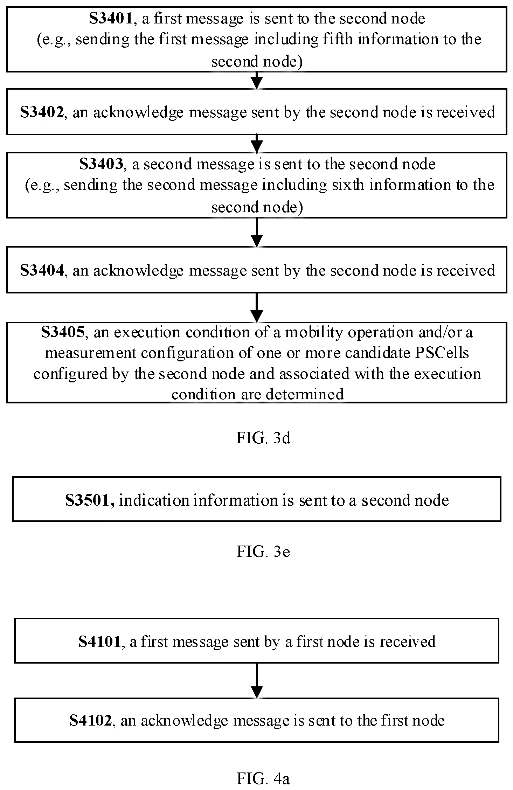

FIG. 3d is a schematic flowchart of a method for processing information according to an embodiment of the disclosure. As shown in FIG. 3d, the embodiment of the disclosure relates to a method for processing information executed by a first node, and the method includes the following steps.

At step S3401, a first message is sent to a second node.

In some embodiments, for optional implementations of step S3401, reference may be made to the optional implementations of step S2401 in FIG. 2d and other relevant parts in the embodiments related to FIG. 2d, which are not repeated herein.

At step S3402, an acknowledge message sent by the second node is received.

In some embodiments, for optional implementations of step S3402, reference may be made to the optional implementations of step S2202 in FIG. 2b and other relevant parts in the embodiments related to FIG. 2b, which are not repeated herein.

At step S3403, a second message is sent to the second node.

In some embodiments, for optional implementations of step S3403, reference may be made to the optional implementations of step S2403 in FIG. 2d and other relevant parts in the embodiments related to FIG. 2d, which are not repeated herein.

At step S3404, an acknowledge message sent by the second node is received.

In some embodiments, for optional implementations of step S3404, reference may be made to the optional implementations of step S2204 in FIG. 2b and other relevant parts in the embodiments related to FIG. 2b, which are not repeated herein.

At step S3405, an execution condition of a mobility operation and/or a measurement configuration of one or more candidate PSCells configured by the second node and associated with the execution condition are determined.

In some embodiments, for optional implementations of step S3405, reference may be made to the optional implementations of step S2205 in FIG. 2b and other relevant parts in the embodiments related to FIG. 2b, which are not repeated herein.

The method for processing information involved in the embodiments of the disclosure may include at least one of steps S3401 to S3405. For example, step S3401 combined with steps S3402 and S3405 may be implemented as an independent embodiment, but is not limited thereto.

In some embodiments, steps S3403 and S3404 are optional, and one or more of these steps may be omitted or replaced in different embodiments. It may be understood that in a case where the C-SN(s) and the candidate PSCell(s) configured by the C-SN(s) remain unchanged, or in a case where the candidate PSCell(s) determined to be configured by the C-SN(s) are the same as the candidate PSCell(s) prepared to be configured for the terminal by the first node or the fourth node, then when the first node sends the first message carrying the first information to the second node, the first node may determine the execution condition and the measurement configuration of the one or more candidate PSCells configured by the second node according to the acknowledge message of the first message returned by the second node. There is no need for the first node to send the second message to the second node again, nor for the second node to return the acknowledge message of the second message.

FIG. 3e is a schematic flowchart of a method for processing information according to an embodiment of the disclosure. As shown in FIG. 3e, the embodiment of the disclosure relates to a method for processing information executed by a first node, and the method includes the following steps.

At step S3501, the first node sends indication information to a second node.

In some embodiments, the indication information is configured for the second node to configure an execution condition for executing a mobility operation. The first node is associated with a PCell of a terminal, and the second node is associated with one or more candidate PSCells of the terminal.

In some embodiments, the indication information includes at least one of:
first information indicating a first candidate PSCell set, in which the first candidate PSCell set includes one or more candidate PSCells prepared to be configured for the terminal; or
second information indicating a second candidate PSCell set, in which the second candidate PSCell set includes one or more candidate PSCells having been determined to be configured for the terminal.

In some embodiments, the indication information includes at least one of:
third information indicating a third candidate PSCell set, in which the third candidate PSCell set includes one or more candidate PSCells currently having been determined to be configured for the terminal; or
fourth information indicating a fourth candidate PSCell set, in which the fourth candidate PSCell set includes one or more candidate PSCells having been determined to be additionally configured for the terminal.

In some embodiments, the indication information includes at least one of:
fifth information indicating a first candidate PSCell set, in which the first candidate PSCell set includes one or more candidate PSCells prepared to be configured for the terminal; or
sixth information indicating difference information between the first candidate PSCell set and a second candidate PSCell set, in which the second candidate PSCell set includes one or more candidate PSCells having been determined to be configured for the terminal.

In some embodiments, the first candidate PSCell set includes at least one of:
all candidate PSCells prepared to be configured for the terminal; or
one or more candidate PSCells associated with a third node and prepared to be configured for the terminal, in which the third node is different from the second node.

In some embodiments, the second candidate PSCell set includes at least one of:
all candidate PSCells having been determined to be configured for the terminal; or
one or more candidate PSCells associated with a third node and having been determined to be configured for the terminal, in which the third node is different from the second node.

In some embodiments, the indication information includes at least one of:
cell identity information of the one or more candidate PSCells;
a node ID of a node associated with the one or more candidate PSCells;
cell measurement result information of the one or more candidate PSCells; or
cell frequency point information of the one or more candidate PSCells.

In some embodiments, sending, by the first node, the indication information to the second node includes:
sending, by the first node, a first message containing the first information to the second node, in which the first message is configured for a secondary node (SN) addition for the terminal;
   or
sending, by the first node, a second message containing the second information to the second node, in which the second message is configured for an SN modification for the terminal.

In some embodiments, sending, by the first node, the indication information to the second node includes:
sending, by the first node, a first message containing the third information to the second node, in which the first message is configured for an SN addition for the terminal; and
sending, by the first node, a second message containing the fourth information to the second node, in which the second message is configured for an SN modification for the terminal.

In some embodiments, sending, by the first node, the indication information to the second node includes:
sending, by the first node, a first message containing the fifth information to the second node, in which the first message is configured for an SN addition for the terminal; and
sending, by the first node, a second message containing the sixth information to the second node, in which the second message is configured for an SN modification for the terminal.

In some embodiments, both the first message and the second message are Xn messages.

In some embodiments, the Xn message includes an inter-node RRC message container, and the indication information is carried in the inter-node RRC message container.

**In** some embodiments, the inter-node RRC message container includes CG-ConfigInfo.

In some embodiments, the indication information includes seventh information indicating at least one of:
a mobility operation having been configured for the terminal; or
a mobility operation prepared to be configured for the terminal.
In some embodiments, the mobility operation includes at least one of:
a mobility operation initiated by the first node; or
a mobility operation initiated by a fourth node.

In some embodiments, sending, by the first node, the indication information to the second node includes one of:
in response to the first node initiating an addition operation of the second node or a modification operation of the second node, sending, by the first node, the indication information to the second node; and
in response to the first node receiving a third message indicating that a fourth node initiates an addition operation of the second node or a modification operation of the second node, sending, by the first node, the indication information to the second node.

In some embodiments, in a case where the first node initiates the addition operation of the second node or the modification operation of the second node, a first candidate PSCell set is determined by the first node;
or
a first candidate PSCell set is determined by the third message.

In some embodiments, the method further includes:
receiving, by the first node, an acknowledge message sent by the second node, in which the acknowledge message is configured to determine the execution condition of the mobility operation and/or a measurement configuration of one or more candidate PSCells configured by the second node.

In some embodiments, the acknowledge message includes at least one of:
the execution condition of the mobility operation; or
an event type and/or a parameter value corresponding to the execution condition of the mobility operation, in which the event type and/or the parameter value corresponding to the execution condition are configured for the first node and/or a fourth node to generate the execution condition of the mobility operation.

In some embodiments, the measurement configuration is associated with a measurement configuration of an MN and/or a measurement configuration of an SN,
the MN includes a source MN and/or a current MN, and
the SN includes an S-SN and/or a C-SN.

In some embodiments, the parameter value includes at least one of:
an offset;
a threshold value;
a trigger time; or
a hysteresis value.

In some embodiments, the mobility operation includes at least one of:
a CPA operation; or
a CPC operation.

FIG. 4a is a schematic flowchart of a method for processing information according to an embodiment of the disclosure. As shown in FIG. 4a, the embodiment of the disclosure relates to a method for processing information executed by a second node, and the method includes the following steps.

At step S4101, a first message sent by a first node is received.

In some embodiments, for optional implementations of step S4101, reference may be made to the optional implementations of step S2101 in FIG. 2a and other relevant parts in the embodiments related to FIG. 2a, which are not repeated herein.

At step S4102, an acknowledge message is sent to the first node.

In some embodiments, for optional implementations of step S4102, reference may be made to the optional implementations of step S2102 in FIG. 2a and other relevant parts in the embodiments related to FIG. 2a, which are not repeated herein.

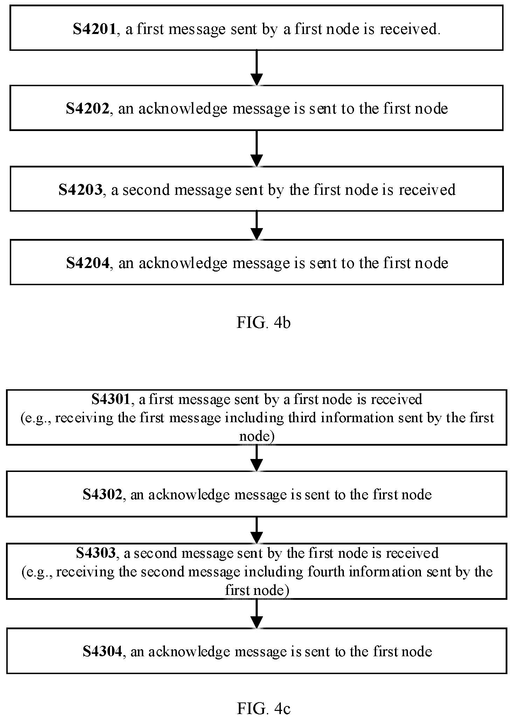

FIG. 4b is a schematic flowchart of a method for processing information according to an embodiment of the disclosure. As shown in FIG. 4b, the embodiment of the disclosure relates to a method for processing information executed by a second node, and the method includes the following steps.

At step S4201, a first message sent by a first node is received.

In some embodiments, for optional implementations of step S4201, reference may be made to the optional implementations of step S2201 in FIG. 2b and other relevant parts in the embodiments related to FIG. 2b, which are not repeated herein.

At step S4202, an acknowledge message is sent to the first node.

In some embodiments, for optional implementations of step S4202, reference may be made to the optional implementations of step S2202 in FIG. 2b and other relevant parts in the embodiments related to FIG. 2b, which are not repeated herein.

At step S4203, a second message sent by the first node is received.

In some embodiments, for optional implementations of step S4203, reference may be made to the optional implementations of step S2203 in FIG. 2b and other relevant parts in the embodiments related to FIG. 2b, which are not repeated herein.

At step S4204, an acknowledge message is sent to the first node.

In some embodiments, for optional implementations of step S4204, reference may be made to the optional implementations of step S2204 in FIG. 2b and other relevant parts in the embodiments related to FIG. 2b, which are not repeated herein.

The method for processing information involved in the embodiments of the disclosure may include at least one of steps S4201 to S4204. For example, step S4201 combined with step S4202 may be implemented as an independent embodiment, but is not limited thereto.

In some embodiments, steps S4203 and S4204 are optional, and one or more of these steps may be omitted or replaced in different embodiments. It may be understood that in a case where the first node sends the first message carrying the first information to the second node, the first node may determine the execution condition and the measurement configuration of the one or more candidate PSCells configured by the second node according to the acknowledge message of the first message returned by the second node, without a need for the first node to send the second message to the second node again, nor for the second node to return the acknowledge message of the second message.

FIG. 4c is a schematic flowchart of a method for processing information according to an embodiment of the disclosure. As shown in FIG. 4c, the embodiment of the disclosure relates to a method for processing information executed by a second node, and the method includes the following steps.

At step S4301, a first message sent by a first node is received.

In some embodiments, for optional implementations of step S4301, reference may be made to the optional implementations of step S2301 in FIG. 2c and other relevant parts in the embodiments related to FIG. 2c, which are not repeated herein.

At step S4302, an acknowledge message is sent to the first node.

In some embodiments, for optional implementations of step S4302, reference may be made to the optional implementations of step S2202 in FIG. 2b and other relevant parts in the embodiments related to FIG. 2b, which are not repeated herein.

At step S4303, a second message sent by the first node is received.

In some embodiments, for optional implementations of step S4303, reference may be made to the optional implementations of step S2303 in FIG. 2c and other relevant parts in the embodiments related to FIG. 2c, which are not repeated herein.

At step S4304, an acknowledge message is sent to the first node.

In some embodiments, for optional implementations of step S4304, reference may be made to the optional implementations of step S2204 in FIG. 2b and other relevant parts in the embodiments related to FIG. 2b, which are not repeated herein.

The method for processing information involved in the embodiments of the disclosure may include at least one of steps S4301 to S4304. For example, step S4301 combined with step S4302 may be implemented as an independent embodiment, but is not limited thereto.

In some embodiments, steps S4303 and S4304 are optional, and one or more of these steps may be omitted or replaced in different embodiments. It may be understood that in a case where the C-SN(s) and the candidate PSCell(s) configured by the C-SN(s) remain unchanged, or in a case where the candidate PSCell(s) determined to be configured by the C-SN(s) are the same as the candidate PSCell(s) prepared to be configured for the terminal by the first node or the fourth node, then when the first node sends the first message carrying the first information to the second node, the first node may determine the execution condition and the measurement configuration of the one or more candidate PSCells configured by the second node according to the acknowledge message of the first message returned by the second node. There is no need for the first node to send the second message to the second node again, nor for the second node to return the acknowledge message of the second message.

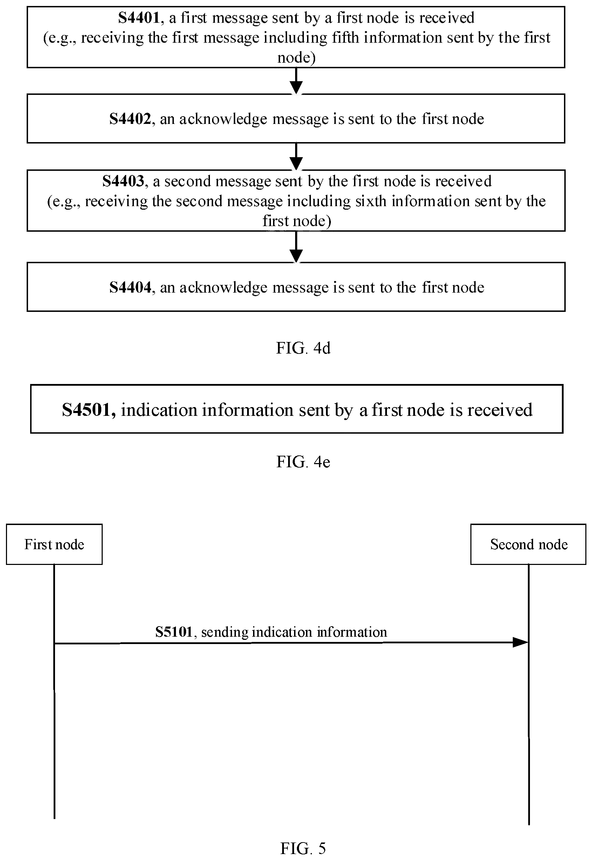

FIG. 4d is a schematic flowchart of a method for processing information according to an embodiment of the disclosure. As shown in FIG. 4d, the embodiment of the disclosure relates to method for processing information d executed by a second node, and the method includes the following steps.

At step S4401, a first message sent by a first node is received.

In some embodiments, for optional implementations of step S4401, reference may be made to the optional implementations of step S2401 in FIG. 2d and other relevant parts in the embodiments related to FIG. 2d, which are not repeated herein.

At step S4402, an acknowledge message is sent to the first node.

In some embodiments, for optional implementations of step S4402, reference may be made to the optional implementations of step S2202 in FIG. 2b and other relevant parts in the embodiments related to FIG. 2b, which are not repeated herein.

At step S4403, a second message sent by the first node is received.

In some embodiments, for optional implementations of step S4403, reference may be made to the optional implementations of step S2403 in FIG. 2d and other relevant parts in the embodiments related to FIG. 2d, which are not repeated herein.

At step S4404, an acknowledge message is sent to the first node.

In some embodiments, for optional implementations of step S4404, reference may be made to the optional implementations of step S2204 in FIG. 2b and other relevant parts in the embodiments related to FIG. 2b, which are not repeated herein.

The method for processing information involved in the embodiments of the disclosure may include at least one of steps S4401 to S4404. For example, step S4401 combined with step S4402 may be implemented as an independent embodiment, but is not limited thereto.

In some embodiments, steps S4403 and S4404 are optional, and one or more of these steps may be omitted or replaced in different embodiments. It may be understood that in a case where the C-SN(s) and the candidate PSCell(s) configured by the C-SN(s) remain unchanged, or in a case where the candidate PSCell(s) determined to be configured by the C-SN(s) are the same as the candidate PSCell(s) prepared to be configured for the terminal by the first node or the fourth node, then when the first node sends the first message carrying the first information to the second node, the first node may determine the execution condition and the measurement configuration of the one or more candidate PSCells configured by the second node according to the acknowledge message of the first message returned by the second node. There is no need for the first node to send the second message to the second node again, nor for the second node to return the acknowledge message of the second message.

FIG. 4e is a schematic flowchart of a method for processing information according to an embodiment of the disclosure. As shown in FIG. 4e, the embodiment of the disclosure relates to a method for processing information executed by a second node, and the method includes the following steps.

At step S4501, the second node received a first message sent by a first node.

In some embodiments, the indication information is configured for the second node to configure an execution condition for executing a mobility operation, in which the first node is associated with a PCell of a terminal, and the second node is associated with one or more candidate PSCells of the terminal.

In some embodiments, the indication information includes at least one of:
first information indicating a first candidate PSCell set, in which the first candidate PSCell set includes one or more candidate PSCells prepared to be configured for the terminal; or
second information indicating a second candidate PSCell set, in which the second candidate PSCell set includes one or more candidate PSCells having been determined to be configured for the terminal.

In some embodiments, the indication information includes at least one of:
third information indicating a third candidate PSCell set, in which the third candidate PSCell set includes one or more candidate PSCells currently having been determined to be configured for the terminal; or
fourth information indicating a fourth candidate PSCell set, in which the fourth candidate PSCell set includes one or more candidate PSCells having been determined to be additionally configured for the terminal.

In some embodiments, the indication information includes at least one of:
fifth information indicating a first candidate PSCell set, in which the first candidate PSCell set includes one or more candidate PSCells prepared to be configured for the terminal; or
sixth information indicating difference information between the first candidate PSCell set and a second candidate PSCell set, in which the second candidate PSCell set includes one or more candidate PSCells having been determined to be configured for the terminal.

In some embodiments, the first candidate PSCell set includes at least one of:
all candidate PSCells prepared to be configured for the terminal; or
one or more candidate PSCells associated with a third node and prepared to be configured for the terminal, in which the third node is different from the second node.

In some embodiments, the second candidate PSCell set includes at least one of:
all candidate PSCells having been determined to be configured for the terminal; or
one or more candidate PSCells associated with a third node and having been determined to be configured for the terminal, in which the third node is different from the second node.

In some embodiments, the indication information includes at least one of:
cell identity information of the one or more candidate PSCells;
a node ID of a node associated with the one or more candidate PSCells;
cell measurement result information of the one or more candidate PSCells; or
cell frequency point information of the one or more candidate PSCells.

In some embodiments, receiving, by the second node, the indication information sent by the first node includes:
receiving, by the second node, a first message containing the first information sent by the first node, in which the first message is configured for an SN addition for the terminal;
   or
receiving, by the second node, a second message containing the second information sent by the first node, in which the second message is configured for an SN modification for the terminal.

In some embodiments, receiving, by the second node, the indication information sent by the first node includes:
receiving, by the second node, a first message containing the third information sent by the first node; and
receiving, by the second node, a second message containing the fourth information sent by the first node.

In some embodiments, receiving, by the second node, the indication information sent by the first node includes:
receiving, by the second node, a first message containing the fifth information sent by the first node; and
receiving, by the second node, a second message containing the sixth information sent by the first node.

In some embodiments, both the first message and the second message are Xn messages.

In some embodiments, the Xn message includes an inter-node radio RRC message container, and the indication information is carried in the inter-node RRC message container.

In some embodiments, the inter-node RRC message container includes CG-ConfigInfo.

In some embodiments, the indication information includes seventh information indicating at least one of:
a mobility operation having been configured for the terminal; or
a mobility operation prepared to be configured for the terminal.

In some embodiments, the mobility operation includes at least one of:
a mobility operation initiated by the first node; or
a mobility operation initiated by a fourth node.

In some embodiments, the method further includes:
sending, by the second node, an acknowledge message to the first node, in which the acknowledge message is configured to determine the execution condition of the mobility operation and/or a measurement configuration of one or more candidate PSCells configured by the second node.

In some embodiments, the acknowledge message includes at least one of:
the execution condition of the mobility operation; or
an event type and/or a parameter value corresponding to the execution condition of the mobility operation, in which the event type and/or the parameter value corresponding to the execution condition are configured for the first node and/or a fourth node to generate the execution condition of the mobility operation.

In some embodiments, the measurement configuration is associated with a measurement configuration of an MN and/or a measurement configuration of an SN,
the MN includes a source MN and/or a current MN, and
the SN includes an S-SN and/or a C-SN.

In some embodiments, the parameter value includes at least one of:
an offset;
a threshold value;
a trigger time; or
a hysteresis value.

In some embodiments, the mobility operation includes at least one of:
a CPA operation; or
a CPC operation.

FIG. 5 is an interaction diagram of a method for processing information according to an embodiment of the disclosure. As shown in FIG. 5, the embodiment of the disclosure relates to a method for processing information applied to communication system 100, and the method includes the following steps.

At step S5101, a first node sends indication information to a second node.

In some embodiments, the indication information is configured for the second node to configure an execution condition for executing a mobility operation, in which the first node is associated with a PCell of a terminal, and the second node is associated with one or more candidate PSCells of the terminal.

In some embodiments, the aforementioned method may include the methods in the embodiments on the communication system side, UE side, access network device side, core network device side, etc., which are not repeated herein.

### Scheme 1

When requesting the C-SN to prepare for subsequent CPAC, provide a list of all candidate PSCells that have been configured for the UE and/or are prepared to be configured for the UE. When generating a configuration corresponding to a second candidate PSCells, the C-SN simultaneously generates an execution condition for the subsequent CPAC, where each candidate PSCell is corresponded to the corresponding execution condition.

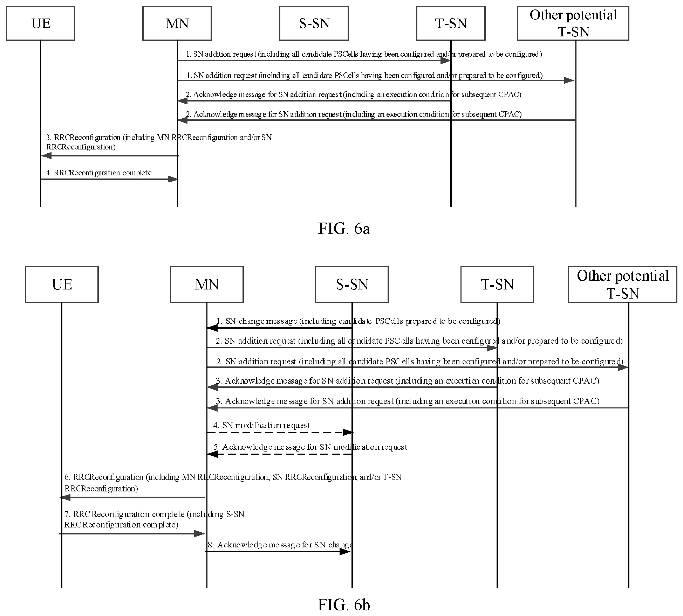

As shown in FIG. 6a and FIG. 6b, FIG. 6a is a schematic flowchart of an MN-initiated CPAC according to an embodiment, and FIG. 6b is a schematic flowchart of an SN-initiated CPAC according to an embodiment.

Embodiment 1: In response to the network side (the MN or the S-SN, corresponding to the MN-initiated and SN-initiated subsequent CPAC respectively) configuring a first mobility operation (subsequent CPAC) for the UE, the MN sends the first message to a target SN (T-SN), requesting the T-SN to prepare resources for the CPAC operation subsequent to the first mobility operation of the UE.

It should be noted that the first mobility operation corresponds to the mobility operation in the disclosure.

For example, the "network side" in "the network side configures the subsequent CPAC for the UE" refers to a network-side node, such as the MN or the S-SN, corresponding to the MN-initiated and SN-initiated subsequent CPAC respectively.

Embodiment 2: Based on Embodiment 1, the first message includes the first information, where the first information contains at least one of:

2.1, existing (having been configured) candidate target cells (PSCells) of the UE that may be used for the subsequent CPAC;

2.2, candidate target cells (PSCells) that the network side is preaprd to configure for the UE and that may be used for the subsequent CPAC; or
2.3, candidate target cells (PSCells) corresponding to the execution condition for the subsequent CPAC which the network side requires the C-SN to generate.

For example, the subsequent CPAC refers to the SN-initiated subsequent CPAC and/or the MN-initiated subsequent CPAC.

For example, in addition to IDs of the aforementioned candidate target cells (e.g., physical cell identifier (PCI) of the target cell, global ID of the target cell, etc.), one or more of the following: the ID of a candidate target node corresponding to the candidate target cell, a measurement result of the candidate target cell, and frequency information corresponding to the candidate target cell, may be included.

For example, the candidate target cells usable for the subsequent CPAC refer to information about all candidate target cells configured (and/or) prepared to be configured by the network side for the UE and usable for the subsequent CPAC.

For example, the candidate target cells usable for the subsequent CPAC refer to information about all candidate target cells configured (and/or) prepared to be configured by the network side for the UE, and correspond to other candidate target nodes (excluding the candidate target node receiving the first message) and usable for the subsequent CPAC.

For example, the candidate target cells usable for the subsequent CPAC refer to information about partial candidate target cells configured (and/or) prepared to be configured by the network side for the UE, and determined by the network side based on implementation and usable for the subsequent CPAC.

Herein, the network side may be the MN or the S-SN.

Embodiment 3: Based on embodiment 1 or 2, the first message may be an Xn message and/or an inter-node RRC message, where:

3.1, the Xn message is an SN addition request message;
3.2, the inter-node RRC message: CG-ConfigInfo.

Embodiment 4: Based on any one of embodiments 1 to 3, the first information may be included by the UE via one or more of the following implementation methods.

4.1, Carry Parameter 1 in the inter-node RRC message, where Parameter 1 indicates the candidate target cells that have been configured for the UE and are prepared to be configured for the UE, which are applicable to the first mobility operation.

4.2, Carry Parameter 2 in the inter-node RRC message, where Parameter 2 indicates the candidate target cells having been configured for the UE and applicable to the first mobility operation; and/or carry Parameter 3 in the inter-node RRC message, where Parameter 3 indicates the candidate target cells prepared to be configured and applicable to the first mobility operation.

For example, each of Parameter 1, Parameter 2, and Parameter 3 may include at least one of the ID of the candidate target cell and/or the measurement result. For example, Parameter 1, Parameter 2, and Parameter 3 may be represented by MeasResultList2NR. Alternatively, Parameter 1, Parameter 2, and Parameter 3 may be represented by a cell list, where each element in the list includes the frequency information and a set of cells of a corresponding frequency. For example:

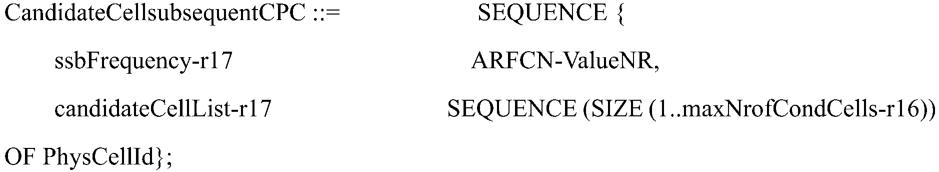

It should be noted that CandidateCellsubsequentCPC may be a candidate PSCell configuration for the mobility operation subsequent CPC; ssbFrequency-r17 may be the frequency information of the candidate PSCell in R17; candidateCellList-r17 may be the cell list of the candidate PSCells of the terminal in R17.

For example, Parameter 2 may be represented by an RRCReconfiguration message corresponding to the MN, which may provide the T-SN with the configuration information of the conditional reconfiguration configured by the MN for the subsequent CPAC.

4.3, Carry Parameter 1 in the Xn message, where Parameter 1 indicates the candidate target cells that have been configured for the UE and are prepared to be configured for the UE, which are applicable to the first mobility operation;
4.4, Carry Parameter 2 in the Xn message, where Parameter 2 indicates the candidate target cells having been configured for the UE and applicable to the first mobility operation; and/or carry Parameter 3 in the Xn message, where Parameter 3 indicates the candidate target cells prepared to be configured and applicable to the first mobility operation.

Herein, each of Parameter 1, Parameter 2, and Parameter 3 may include at least one of the ID of the candidate target cell and/or the candidate target node corresponding to the candidate target cell. For example, Parameters 1 to 3 may be represented by one or more pieces of information in Table 1 below.

Table 1 includes a set of lists corresponding to different T-SNs, where each entry in the lists corresponds to one T-SN, and each entry includes a node ID of the T-SN and IDs (e.g., CGI) of all candidate PSCells prepared by the T-SN for the UE.

**Table 1**

| IE/Group name | Presence | Range | IE type and reference | Semantics description | Criticality | Assigned Criticality |
|---|---|---|---|---|---|---|
| Subsequent CPC information | O (Optional) | | | | YES | Ignore |
| DC Target S-NG-RAN node set | | 1 | | | | |
| DC Target S-NG-RAN node | M (mandatory) | 1<maxnoofTargetS Ns> | | | | |
| Target S-NG-RAN node ID | | | Global NG-RAN Node ID 9.2.2.3 | | | |
| Candidate PSCell list | | 1 | | | | |
| Candidate PSCell | | 1<maxnoofPSCellC andidate> | | | | |
| PSCell ID | M (mandatory) | | NR CGI 9.2.2.7 | | | |

4.5, The Xn message and the inter-node RRC message contain information indicating the candidate target cells applicable to the first mobility operation, in which the candidate target cells have been configured and/or prepared to be configured for the UE.

For example, other C-SNs configured for the UE by the network besides the C-SN that receives the first message may be indicated via including the following information in the Xn message. For example, the Xn messages may include one or more items of the information in Table 2 below, which are specified as follows.

**Table 2**

| IE/Group name | Presence | Range | IE type and reference | Semantics description | Criticality | Assigned Criticality |
|---|---|---|---|---|---|---|
| Subsequent CPC information | O (Optional) | | | | YES | Ignore |
| DC Target S-NG-RAN node set | | 1 | | | | |
| DC Target S-NG-RAN node | | 1<maxnoofTargetSNs> | | | | |
| Target S-NG-RAN node ID | M (mandatory) | | Global NG-RAN Node ID 9.2.2.3 | | | |
| CPC indication | M (mandatory) | 1 | ENUMERATED (CPC-initiation, CPC-modification, CPC-cancellation, ...) | | | |
| S-NG-RAN node to M-NG-RAN node container | M (mandatory) | 1<maxnoofPSCellCandidate> | OCTET STRING | Includes the CG-Config message as defined in subclause 11.2.2 of TS 38.331 [10] | | |

The Xn message herein includes the inter-node RRC message. Each C-SN corresponds to one container, where the one container contains one inter-node RRC message (i.e., CG-Config). The inter-node RRC message includes a list of candidate cells having been configured and/or prepared to be configured by the C-SN for the UE.

Embodiment 5: Based on any one of Embodiments 1-4, the first information may include information indicating (explicit indication or implicit indication) that the information corresponds to the subsequent CPAC of the first mobility operation, which may be one or more of:
5.1, information indicating that the information corresponds to the subsequent CPAC having been configured for the UE;
5.2, information indicating that the information corresponds to the subsequent CPAC prepared to be configured by the network for the UE;
5.3, information indicating that the information corresponds to the subsequent CPAC;
5.3.1, information indicating that the information corresponds to the MN-initiated subsequent CPAC;
5.3.2, information indicating that the information corresponds to the SN-initiated subsequent CPAC;
5.4, information indicating that the first information is used for acquisition of subsequent CPAC-related information.

Embodiment 6: For a configuration of the MN-initiated subsequent CPAC, the candidate target cells prepared to be configured by the network for the UE are determined by the MN. For a configuration of the SN-initiated subsequent CPAC, the candidate target cells prepared to be configured by the network for the UE are determined by the S-SN, sent by the S-SN to the MN, and then the MN notifies the SN via the first message.

Embodiment 7: Based on any one of Embodiments 1-6, the T-SN receives the first message sent by the MN, and generates the execution condition for the subsequent CPAC and a corresponding first candidate target cell configuration based on corresponding measurement result information and the candidate target cells for the subsequent CPAC contained in the first message, as well as a first candidate target cell configured by the T-SN for the UE, in which the first candidate target cell configuration includes the measurement configuration corresponding to the execution condition.

Embodiment 8: The T-SN sends an acknowledgment message of the first message, which includes the generated execution conditions for the subsequent CPAC and/or the first candidate target cell configuration.

Embodiment 9: The execution condition described in Embodiment 8 is generated by the C-SN, and may be one or more of:
9.1, the execution condition generated with reference to the measurement configuration of the C-SN, in which the execution condition corresponds to the measurement ID corresponding to the measurement configuration of the C-SN;
9.2 the execution condition generated with reference to the measurement configuration of the S-SN, wherein the execution condition corresponds to the measurement ID corresponding to the measurement configuration of the S-SN;
9.3, the execution condition generated with reference to the measurement configuration of the S-MN, wherein the execution condition corresponds to the measurement ID corresponding to the measurement configuration of the S-MN.

Embodiment 10: The C-SN generates the event type and/or corresponding parameters for each execution condition, where the parameters include but are not limited to one or more of A3 offset, A4 threshold value, A5 threshold value 1, A5 threshold value 2, trigger time TTT, and hysteresis value.

Based on the event type and/or corresponding parameters of the execution conditions provided by the C-SN, the MN may generate the execution conditions corresponding to the C-SN for the subsequent CPAC.

Based on the event type and/or corresponding parameters of the execution conditions provided by the C-SN, the MN may forward such information to the S-SN, and the S-SN generates the execution conditions corresponding to the C-SN for the subsequent CPAC accordingly.

As an example, the network side currently configures candidate PSCell 1 for the UE for the subsequent CPAC, and intends to configure candidate PSCell 2 and PSCell 3 for the UE, where candidate PSCell 2 corresponds to T-SN 2 and PSCell 3 corresponds to T-SN 3.

The MN sends the first information to T-SN 2, which includes the information of PSCell 1 and PSCell 3, and simultaneously requests T-SN 2 to prepare resources and candidate configurations for PSCell 2. Based on the first information, T-SN 2 generates execution condition 1 and execution condition 3 for supporting subsequent CPAC when PSCell 2 serves as the serving cell, with the target cells being PSCell 1 and PSCell 3 respectively, as well as corresponding measurement configurations. T-SN 2 sends execution condition 1, execution condition 3, and the configuration information of PSCell 2 including the measurement configuration to the MN via the acknowledgment message of the first message.

It should be noted that the operation of T-SN 3 is similar to that of T-SN 2.

The MN integrates the received acknowledgment messages of the first message sent by a plurality of T-SNs to generate the configuration information to be sent to the UE.

### Scheme 2

Before the MN sends the configuration of the subsequent CPAC to the UE, the MN sends a complete list of prepared candidate PSCells confirmed by a candidate SN to each candidate SN. After receiving the PSCell list, the candidate SN generates execution conditions for the subsequent CPAC corresponding to the CPAC configuration prepared by the candidate SN.

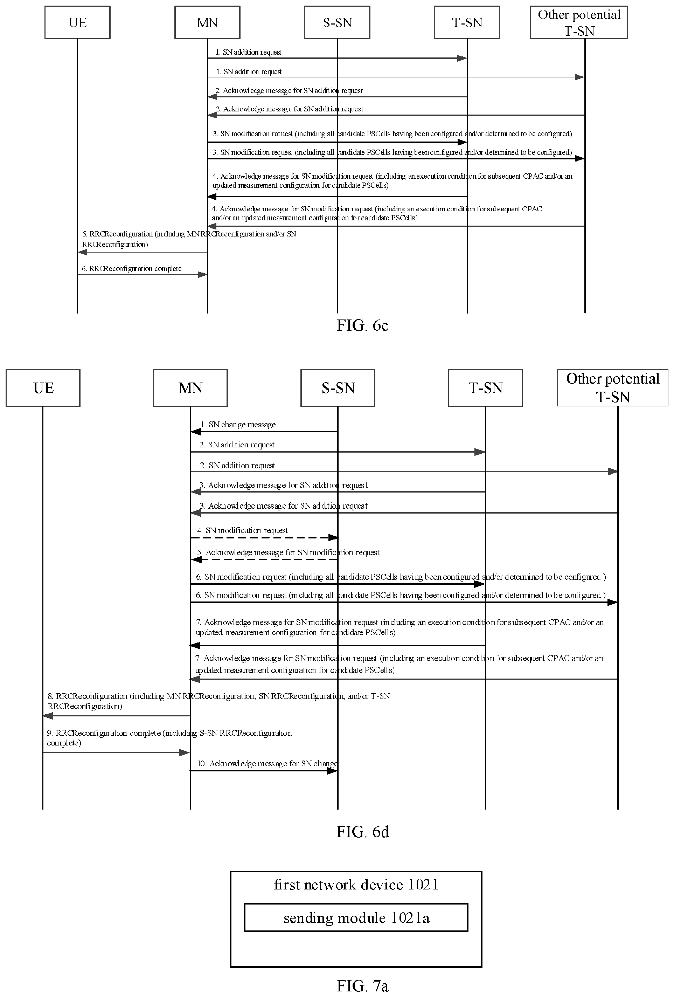

As shown in FIG. 6c and FIG. 6d, FIG. 6c is a schematic flowchart of an MN-initiated CPAC according to an embodiment, and FIG. 6d is a schematic flowchart of an SN-initiated CPAC according to an embodiment.

Embodiment 1: In response to the network side (MN or S-SN, corresponding to MN-initiated and SN-initiated subsequent CPAC respectively) configuring the first mobility operation (subsequent CPAC) for the UE, the MN sends a first message to the T-SN, requesting the T-SN to prepare resources for the CPAC operation subsequent to the first mobility operation of the UE. After completing the preparation for the subsequent CPAC, the T-SN sends a corresponding acknowledgment message to the MN for confirming the configuration of the subsequent CPAC. The MN sends a second message to the T-SN.

Embodiment 2: Based on Embodiment 1, the second message contains second information, which includes at least one of:
2.1, existing (configured) candidate target cells (PSCells) of the UE available for the subsequent CPAC;
2.2, accepted (i.e., confirmed) candidate target cells (PSCells) configured for the UE available for the subsequent CPAC;
2.3, candidate target cells (PSCells) for which the network side requires the C-SN to generate execution conditions for the subsequent CPAC;

For example, in addition to the IDs of the aforementioned candidate target cells (e.g., PCI of the target cell, global ID of the target cell, etc.), it may also include one or more of a candidate target node ID corresponding to the candidate target cell, a measurement result of the candidate target cell, and frequency information corresponding to the candidate target cell.

For example, the candidate target cells available for the subsequent CPAC refer to information of all candidate target cells configured and/or accepted by the network side for the UE for the subsequent CPAC;

For example, the candidate target cells available for the subsequent CPAC refer to information of all candidate target cells configured by the network side for the UE and/or received by other candidate target nodes (except the candidate target node receiving the second message) for the subsequent CPAC;

For example, the candidate target cells available for the subsequent CPAC refer to the information of some candidate target cells configured and/or accepted by the network side for the UE and determined by the network side based on implementation.

The network side may be the MN or the S-SN.

Embodiment 3: Based on any one of Embodiments 1-2, the second message may be an Xn message and/or an inter-node RRC message.

3.1, Xn message: SN modification request.

3.2, Inter-node RRC message: CG-ConfigInfo.

Embodiments 4-6 are the same as Embodiments 4-6 of Scheme 1.

Embodiment 7: Based on any one of Embodiments 1-6, the T-SN receives the second message sent by the MN, and generates execution conditions for the subsequent CPAC based on corresponding measurement result information and the candidate target cells for subsequent CPAC contained in the second message, as well as the candidate target cells configured by the T-SN for the UE.

The T-SN shall generate a set of execution conditions for the subsequent CPAC of each candidate target cell prepared by the T-SN, and each execution condition in this set corresponds to other candidate target cells except the first candidate target cell. If necessary, the T-SN updates the measurement configuration of the first candidate target cell, where the measurement configuration corresponds to the set of execution conditions.

Embodiment 8: The T-SN sends an acknowledgment message of the second message, which contains the generated execution conditions for the subsequent CPAC and/or the updated measurement configuration.

Embodiment 9: Same as Embodiment 9 of Scheme 1.

As an example, currently, the network side configures candidate PSCell 1 for the UE for the subsequent CPAC, and prepares to configure candidate PSCell 2 and PSCell 3 for the UE, where candidate PSCell 2 corresponds to T-SN 2 and PSCell 3 corresponds to T-SN 3.

The MN sends the first information to T-SN 2, requesting T-SN 2 to prepare resources and candidate configurations for PSCell 2. T-SN 2 sends an acknowledgment message of the first message, which contains the candidate configuration of PSCell 2.

After the MN receives the acknowledgment messages from T-SN 2 and T-SN 3 and before sending configuration information to the UE, the MN sends a second message to T-SN 2. Based on the second information, T-SN 2 generates execution condition 1 and execution condition 3 for supporting subsequent CPAC when PSCell 2 serves as the serving cell, with the target cells being PSCell 1 and PSCell 3 respectively, as well as corresponding measurement configurations. T-SN 2 sends execution condition 1, execution condition 3 and the updated measurement configuration information to the MN via the acknowledgment message of the second message.

It should be noted that the operation of T-SN 3 is similar to that of T-SN 2.

The MN integrates the received acknowledgment messages of the second message sent by a plurality of T-SNs to generate configuration information to be sent to the UE.

Scheme 3: Integrate Scheme 1 and Scheme 2.

Option 1: The MN sends the candidate target cells configured for the UE to the T-SN in the first message, and then before configuring the subsequent CPAC for the UE, the MN sends a second message to the T-SN, where the second message contains candidate target cells accepted (or confirmed) by other T-SNs.

Option 2: Alternatively, after Embodiments 1-2 of Scheme 1 are executed, if all candidate SNs have not accepted all the candidate cells recommended by the MN or S-SN, the MN sends a second message to the T-SN before configuring the subsequent CPAC for the UE, where the second message contains candidate target cells accepted (or confirmed) by other T-SNs.

The embodiments of the disclosure also provide an apparatus for implementing any of the foregoing methods. For example, an apparatus is provided, which includes units or modules configured to implement each step performed by the terminal in any of the foregoing methods. For another example, another apparatus is further provided, which includes units or modules configured to implement each step performed by the network device (e.g., access network device, core network device, etc.) in any of the foregoing methods.

It should be understood that the division of units or modules in the above apparatus is merely a logical function division. In actual implementation, all or part of units or modules may be integrated into a single physical entity, or may be physically separated. In addition, the units or modules in the apparatus may be implemented in the form of a processor invoking software: for example, the apparatus includes a processor connected to a memory, where instructions are stored in the memory, and the processor invokes the instructions stored in the memory to implement any of the above methods or the functions of each unit or module of the above apparatus. The processor may be a general-purpose processor, such as a central processing unit (CPU) or a microprocessor, and the memory may be an internal memory of the apparatus or an external memory of the apparatus. Alternatively, the units or modules in the apparatus may be implemented in the form of hardware circuits, and the functions of some or all units or modules may be implemented through the design of hardware circuits. The above hardware circuits may be understood as one or more processors; for example, in one implementation, the hardware circuits are application-specific integrated circuits (ASICs), and the functions of some or all of the above units or modules are implemented through the design of logical relationships between components in the circuits; for another example, in another implementation, the hardware circuits may be implemented through programmable logic devices (PLDs). Taking field programmable gate arrays (FPGAs) as an example, they may include a large number of logic gate circuits, and the connection relationships between the logic gate circuits are configured through configuration files to implement the functions of some or all of the above units or modules. All units or modules of the above apparatus may be fully implemented in the form of a processor invoking software, fully implemented in the form of hardware circuits, or partially implemented in the form of a processor invoking software and the remaining part implemented in the form of hardware circuits.

In the embodiments of the disclosure, the processor is a circuit with signal processing capability. In one implementation, the processor may be a circuit with instruction reading and running capabilities, such as a CPU, a microprocessor, a graphics processing unit (GPU) (which may be understood as a microprocessor), or a digital signal processor (DSP). In another implementation, the processor may implement certain functions through the logical relationship of hardware circuits, where the logical relationship of the hardware circuits is fixed or reconfigurable. For example, the processor is a hardware circuit implemented by an application-specific integrated circuit (ASIC) or a programmable logic device (PLD), such as an FPGA. In a reconfigurable hardware circuit, the process in which the processor loads a configuration file to implement hardware circuit configuration may be understood as the process in which the processor loads instructions to implement the functions of some or all of the above units or modules. In addition, the processor may also be a hardware circuit designed for artificial intelligence, which may be understood as an ASIC, such as a neural network processing unit (NPU), a tensor processing unit (TPU), or a deep learning processing unit (DPU).

Fig. 7a is a schematic diagram of a first network device provided in an embodiment of the disclosure. As shown in Fig. 7a, the first network device 1021 includes a sending module 1021a; the sending module 1021a is configured to send indication information to a second node, in which the indication information is configured for the second node to configure an execution condition for executing a mobility operation. The first node is is associated with a PCell of a terminal, and the second node is associated with one or more candidate PSCells of the terminal. In some embodiments, the sending module 1021a is configured to execute the steps related to information transmission and reception performed by the first network device in any of the foregoing information processing methods, which will not be repeated here. In some embodiments, the first network device 1021 further includes a processing module, which is configured to execute the steps related to information processing performed by the first network device in any of the foregoing methods, which are not repeated here.

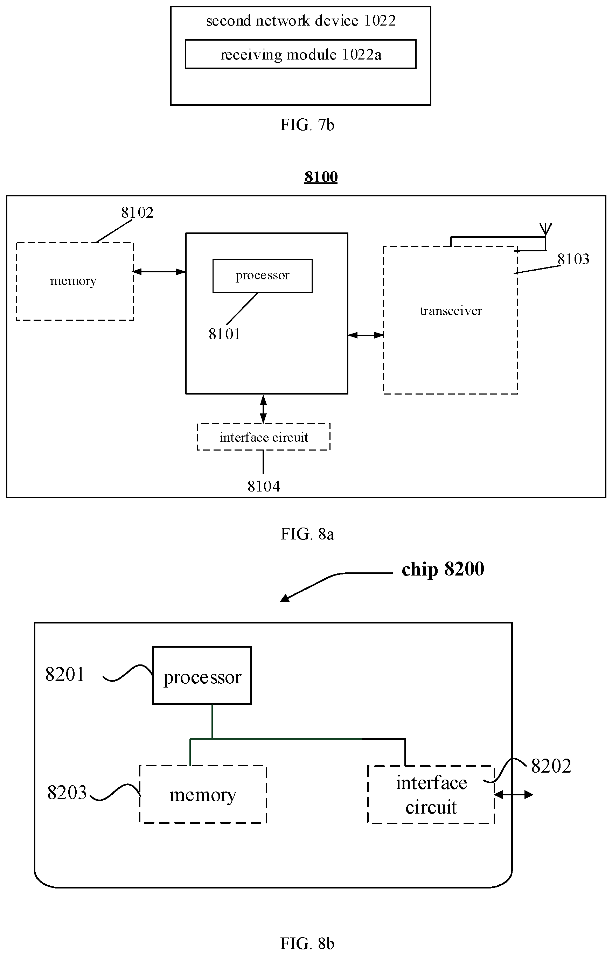

Fig. 7b is a schematic diagram of a second network device provided in an embodiment of the disclosure. As shown in Fig. 7b, the second network device 1022 includes a receiving module 1022a configured to receive the indication information sent by the first node, in which the indication information is configured for the second node to configure an execution condition for executing a mobility operation. The first node is is associated with a PCell of a terminal, and the second node is associated with one or more candidate PSCells of the terminal. In some embodiments, the receiving module 1022a is configured to execute the steps related to information reception and transmission performed by the terminal in any of the foregoing information processing methods, which will not be repeated here. In some embodiments, the second network device 1022 further includes a determination module configured to execute the steps related to information determination performed by the second network device in any of the foregoing methods, which are not repeated here.

Fig. 8a is a schematic diagram of a communication device 8100 provided in an embodiment of the disclosure. The communication device 8100 may be a network device (e.g., an access network device, a core network device, etc.), a terminal (e.g., a user equipment, etc.), a chip, chip system, processor or the like configured to support the network device in implementing any of the foregoing methods, or a chip, chip system, processor or the like configured to support the terminal in implementing any of the foregoing methods for processing information. The communication device 8100 may be configured to implement the methods for processing information described in the foregoing method embodiments, and for details, reference may be made to the descriptions in the foregoing method embodiments.

As shown in Fig. 8a, the communication device 8100 includes one or more processors 8101. The processor 8101 may be a general-purpose processor, a special-purpose processor, or the like, for example, a baseband processor or a CPU. The communication device 8100 is configured to perform any of the aforementioned methods. In some embodiments, the communication device 8100 may be configured to perform all or part of the steps of the communication method performed by the wireless transmitter in the aforesaid embodiments. In some embodiments, the communication device 8100 may be configured to perform all or part of the steps of the communication method performed by the wireless receiver in the aforesaid embodiments.

In some embodiments, the communication device 8100 further includes one or more memories 8102 for storing instructions. In some embodiments, all or part of the memory 8102 may also be located outside the communication device 8100.

In some embodiments, the communication device 8100 further includes one or more transceivers 8103. When the communication device 8100 includes one or more transceivers 8103, the communication steps such as transmission and reception in the aforementioned methods are performed by the transceivers 8103, and the other steps are performed by the processor 8101.

In some embodiments, the transceiver may include a receiver and/or a transmitter, which may be separate or integrated. In some embodiments, terms such as transceiver, transceiver unit, transceiver machine, and transceiver circuit may be replaced with each other, and terms such as transmitter, transmission unit, transmitter machine, and transmission circuit may be replaced with each other, and terms such as receiver, receiving unit, receiver machine, and receiving circuit may be replaced with each other.

The communication device 8100 further includes one or more interface circuits 8104. The interface circuit 8104 is connected to the memory 8102, and may be configured to receive signals from the memory 8102 or other devices, and send signals to the memory 8102 or other devices. For example, the interface circuit 8104 may read the instructions stored in the memory 8102 and send the instructions to the processor 8101.

The communication device 8100 described in the foregoing embodiments may be a network device or a terminal, but the scope of the communication device 8100 described in the disclosure is not limited thereto, and the structure of the communication device 8100 may not be restricted by that shown in Fig. 7. The communication device may be an independent device or part of a larger device. For example, the communication device may be: 1) an independent integrated circuit (IC), a chip, or a chip system or subsystem; (2) a collection of one or more ICs, in some embodiments, the above IC collection may also include a storage component for storing data and programs; (3) an ASIC, such as a modem; (4) a module embeddable in other devices; (5) a receiver, a terminal device, an intelligent terminal device, a cellular phone, a wireless device, a handheld device, a mobile unit, a vehicle-mounted device, a network device, a cloud device, an artificial intelligence device, etc.; (6) others.

Fig. 8b is a schematic diagram of a chip 8200 provided in an embodiment of the disclosure. In the case where the communication device 8100 may be a chip or a chip system, reference may be made to the schematic diagram of the chip 8200 shown in Fig. 8b, but it is not limited thereto.

The chip 8200 includes one or more processors 8201, where the processor 8201 is configured to invoke instructions to enable the chip 8200 to perform any of the foregoing communication methods.

In some embodiments, the chip 8200 further includes one or more interface circuits 8202, which are connected to the memory 8203. The interface circuit 8202 may be configured to receive signals from the memory 8203 or other devices, and send signals to the memory 8203 or other devices. For example, the interface circuit 8202 may read the instructions stored in the memory 8203 and send the instructions to the processor 8201. In some embodiments, the terms including interface circuit, interface, transceiver pin, transceiver, etc. may be used interchangeably.

In some embodiments, the chip 8200 further includes one or more memories 8203 for storing instructions. In some embodiments, all or part of the memory 8203 may be located outside the chip 8200.

The disclosure further provides a storage medium on which instructions are stored. When the instructions are run on the communication device 8100, the communication device 8100 is caused to execute any of the above methods. In some embodiments, the storage medium is an electronic storage medium. In some embodiments, the storage medium is a computer-readable storage medium, but it is not limited thereto, and may also be a storage medium readable by other apparatuses. In some embodiments, the storage medium is a non-transitory storage medium, but it is not limited thereto, and may also be a transitory storage medium.

The disclosure further provides a program product. When the program product is executed by the communication device 8100, the communication device 8100 is caused to execute any of the above methods. In some embodiments, the program product is a computer program product.

The disclosure further provides a computer program which, when run on a computer, enables the computer to perform any of the foregoing communication methods.

Those skilled in the art will readily conceive of other embodiments of the present invention after considering the specification and practicing the invention disclosed herein. The disclosure is intended to cover any variations, uses, or adaptations of the present invention that follow the general principles of the present invention and include common general knowledge or conventional technical means in the technical field not disclosed in the disclosure. The specification and the embodiments are to be regarded as merely exemplary, with the true scope and spirit of the present invention being indicated by the following claims.

It should be understood that the present invention is not limited to the precise structures described above and illustrated in the accompanying drawings, and various modifications and changes may be made without departing from the scope thereof. The scope of the present invention is limited only by the appended claims.

## Claims

1. A method for processing information, comprising:
sending, by a first node, indication information to a second node, wherein the indication information is configured for the second node to configure an execution condition for executing a mobility operation,
wherein the first node is associated with a primary cell (PCell) of a terminal, and the second node is associated with one or more candidate primary and secondary cells (PSCells) of the terminal.

2. The method according to claim 1, wherein the indication information comprises at least one of:
first information indicating a first candidate PSCell set, wherein the first candidate PSCell set comprises one or more candidate PSCells prepared to be configured for the terminal; or
second information indicating a second candidate PSCell set, wherein the second candidate PSCell set comprises one or more candidate PSCells having been determined to be configured for the terminal.

3. The method according to claim 1, wherein the indication information comprises at least one of:
third information indicating a third candidate PSCell set, wherein the third candidate PSCell set comprises one or more candidate PSCells currently having been determined to be configured for the terminal; or
fourth information indicating a fourth candidate PSCell set, wherein the fourth candidate PSCell set comprises one or more candidate PSCells having been determined to be additionally configured for the terminal.

4. The method according to claim 1, wherein the indication information comprises at least one of:
fifth information indicating a first candidate PSCell set, wherein the first candidate PSCell set comprises one or more candidate PSCells prepared to be configured for the terminal; or
sixth information indicating difference information between the first candidate PSCell set and a second candidate PSCell set, wherein the second candidate PSCell set comprises one or more candidate PSCells having been determined to be configured for the terminal.

5. The method according to claim 2 or 4, wherein the first candidate PSCell set comprises at least one of:
all candidate PSCells prepared to be configured for the terminal; or
one or more candidate PSCells associated with a third node and prepared to be configured for the terminal, wherein the third node is different from the second node.

6. The method according to claim 2, wherein the second candidate PSCell set comprises at least one of:
all candidate PSCells having been determined to be configured for the terminal; or
one or more candidate PSCells associated with a third node and having been determined to be configured for the terminal, wherein the third node is different from the second node.

7. The method according to any one of claims 1 to 6, wherein the indication information comprises at least one of:
cell identity information of the one or more candidate PSCells;
a node identifier (ID) of a node associated with the one or more candidate PSCells;
cell measurement result information of the one or more candidate PSCells; or
cell frequency point information of the one or more candidate PSCells.

8. The method according to any one of claims 1 to 7, wherein sending, by the first node, the indication information to the second node comprises:
sending, by the first node, a first message containing the first information to the second node, wherein the first message is configured for a secondary node (SN) addition for the terminal;
or
sending, by the first node, a second message containing the second information to the second node, wherein the second message is configured for an SN modification for the terminal.

9. The method according to any one of claims 1 to 7, wherein sending, by the first node, the indication information to the second node comprises:
sending, by the first node, a first message containing the third information to the second node, wherein the first message is configured for an SN addition for the terminal; and
sending, by the first node, a second message containing the fourth information to the second node, wherein the second message is configured for an SN modification for the terminal.

10. The method according to any one of claims 1 to 7, wherein sending, by the first node, the indication information to the second node comprises:
sending, by the first node, a first message containing the fifth information to the second node, wherein the first message is configured for an SN addition for the terminal; and
sending, by the first node, a second message containing the sixth information to the second node, wherein the second message is configured for an SN modification for the terminal.

11. The method according to any one of claims 8 to 10, wherein both the first message and the second message are Xn messages.

12. The method according to claim 11, wherein the Xn message comprises an inter-node radio resource control (RRC) message container, and the indication information is carried in the inter-node RRC message container.

13. The method according to claim 12, wherein the inter-node RRC message container comprises cell group configuration information (CG-ConfigInfo).

14. The method according to any one of claims 1 to 13, wherein the indication information comprises seventh information indicating at least one of:
a mobility operation having been configured for the terminal; or
a mobility operation prepared to be configured for the terminal.

15. The method according to claim 14, wherein the mobility operation comprises at least one of:
a mobility operation initiated by the first node; or
a mobility operation initiated by a fourth node.

16. The method according to any one of claims 1 to 15, wherein sending, by the first node, the indication information to the second node comprises one of:
in response to the first node initiating an addition operation of the second node or a modification operation of the second node, sending, by the first node, the indication information to the second node; and
in response to the first node receiving a third message indicating that a fourth node initiates an addition operation of the second node or a modification operation of the second node, sending, by the first node, the indication information to the second node.

17. The method according to claim 16, wherein in a case where the first node initiates the addition operation of the second node or the modification operation of the second node,
a first candidate PSCell set is determined by the first node;
or
a first candidate PSCell set is determined by the third message.

18. The method according to any one of claims 1 to 17, further comprising:
receiving, by the first node, an acknowledge message sent by the second node, wherein the acknowledge message is configured to determine the execution condition of the mobility operation and/or a measurement configuration of one or more candidate PSCells configured by the second node.

19. The method according to claim 18, wherein the acknowledge message comprises at least one of:
the execution condition of the mobility operation; or
an event type and/or a parameter value corresponding to the execution condition of the mobility operation, wherein the event type and/or the parameter value corresponding to the execution condition are configured for the first node and/or a fourth node to generate the execution condition of the mobility operation.

20. The method according to claim 18, wherein the measurement configuration is associated with a measurement configuration of a master node (MN) and/or a measurement configuration of an SN,
the MN comprises a source MN and/or a current MN, and the SN comprises a source SN (S-SN) and/or a candidate SN (C-SN).

21. The method according to claim 19, wherein the parameter value comprises at least one of:
an offset;
a threshold value;
a trigger time; or
a hysteresis value.

22. The method according to any one of claims 1 to 21, wherein the mobility operation comprises at least one of:
a conditional PSCell addition (CPA) operation; or
a conditional PSCell change (CPC) operation.

23. A method for processing information, comprising:
receiving, by a second node, indication information sent by a first node, wherein the indication information is configured for the second node to configure an execution condition for executing a mobility operation,
wherein the first node is associated with a primary cell (PCell) of a terminal, and the second node is associated with one or more candidate primary and secondary cells (PSCells) of the terminal.

24. The method according to claim 23, wherein the indication information comprises at least one of:
first information indicating a first candidate PSCell set, wherein the first candidate PSCell set comprises one or more candidate PSCells prepared to be configured for the terminal; or
second information indicating a second candidate PSCell set, wherein the second candidate PSCell set comprises one or more candidate PSCells having been determined to be configured for the terminal.

25. The method according to claim 23, wherein the indication information comprises at least one of:
third information indicating a third candidate PSCell set, wherein the third candidate PSCell set comprises one or more candidate PSCells currently having been determined to be configured for the terminal; or
fourth information indicating a fourth candidate PSCell set, wherein the fourth candidate PSCell set comprises one or more candidate PSCells having been determined to be additionally configured for the terminal.

26. The method according to claim 23, wherein the indication information comprises at least one of:
fifth information indicating a first candidate PSCell set, wherein the first candidate PSCell set comprises one or more candidate PSCells prepared to be configured for the terminal; or
sixth information indicating difference information between the first candidate PSCell set and a second candidate PSCell set, wherein the second candidate PSCell set comprises one or more candidate PSCells having been determined to be configured for the terminal.

27. The method according to claim 24 or 26, wherein the first candidate PSCell set comprises at least one of:
all candidate PSCells prepared to be configured for the terminal; or
one or more candidate PSCells associated with a third node and prepared to be configured for the terminal, wherein the third node is different from the second node.

28. The method according to claim 24, wherein the second candidate PSCell set comprises at least one of:
all candidate PSCells having been determined to be configured for the terminal; or
one or more candidate PSCells associated with a third node and having been determined to be configured for the terminal, wherein the third node is different from the second node.

29. The method according to any one of claims 23 to 28, wherein the indication information comprises at least one of:
cell identity information of the one or more candidate PSCells;
a node identifier (ID) of a node associated with the one or more candidate PSCells;
cell measurement result information of the one or more candidate PSCells; or
cell frequency point information of the one or more candidate PSCells.

30. The method according to any one of claims 23 to 29, wherein receiving, by the second node, the indication information sent by the first node comprises:
receiving, by the second node, a first message containing the first information sent by the first node, wherein the first message is configured for a secondary node (SN) addition for the terminal;
or
receiving, by the second node, a second message containing the second information sent by the first node, wherein the second message is configured for an SN modification for the terminal.

31. The method according to any one of claims 23 to 29, wherein receiving, by the second node, the indication information sent by the first node comprises:
receiving, by the second node, a first message containing the third information sent by the first node; and
receiving, by the second node, a second message containing the fourth information sent by the first node.

32. The method according to any one of claims 23 to 29, wherein receiving, by the second node, the indication information sent by the first node comprises:
receiving, by the second node, a first message containing the fifth information sent by the first node; and
receiving, by the second node, a second message containing the sixth information sent by the first node.

33. The method according to any one of claims 30 to 32, wherein both the first message and the second message are Xn messages.

34. The method according to claim 33, wherein the Xn message comprises an inter-node radio resource control (RRC) message container, and the indication information is carried in the inter-node RRC message container.

35. The method according to claim 34, wherein the inter-node RRC message container comprises cell group configuration information (CG-ConfigInfo).

36. The method according to any one of claims 23 to 35, wherein the indication information comprises seventh information indicating at least one of:
a mobility operation having been configured for the terminal; or
a mobility operation prepared to be configured for the terminal.

37. The method according to claim 36, wherein the mobility operation comprises at least one of:
a mobility operation initiated by the first node; or
a mobility operation initiated by a fourth node.

38. The method according to any one of claims 23 to 37, further comprising:
sending, by the second node, an acknowledge message to the first node, wherein the acknowledge message is configured to determine the execution condition of the mobility operation and/or a measurement configuration of one or more candidate PSCells configured by the second node.

39. The method according to claim 38, wherein the acknowledge message comprises at least one of:
the execution condition of the mobility operation; or
an event type and/or a parameter value corresponding to the execution condition of the mobility operation, wherein the event type and/or the parameter value corresponding to the execution condition are configured for the first node and/or a fourth node to generate the execution condition of the mobility operation.

40. The method according to claim 38, wherein the measurement configuration is associated with a measurement configuration of a master node (MN) and/or a measurement configuration of an SN,
the MN comprises a source MN and/or a current MN, and the SN comprises a source SN (S-SN) and/or a candidate SN (C-SN).

41. The method according to claim 39, wherein the parameter value comprises at least one of:
an offset;
a threshold value;
a trigger time; or
a hysteresis value.

42. The method according to any one of claims 23 to 41, wherein the mobility operation comprises at least one of:
a conditional PSCell addition (CPA) operation; or
a conditional PSCell change (CPC) operation.

43. A method for processing information, comprising:
a first node sending indication information to a second node, wherein the indication information is configured for the second node to configure an execution condition for executing a mobility operation,
wherein the first node is associated with a primary cell (PCell) of a terminal, and the second node is associated with one or more candidate primary and secondary cells (PSCells) of the terminal.

44. A first network device, comprising:
a sending module configured to send indication information to a second node, wherein the indication information is configured for the second node to configure an execution condition for executing a mobility operation,
wherein a first node is associated with a primary cell (PCell) of a terminal, and the second node is associated with one or more candidate primary and secondary cells (PSCells) of the terminal.

45. A second network device, comprising:
a receiving module configured to receive indication information sent by a first node, wherein the indication information is configured for a second node to configure an execution condition for executing a mobility operation,
wherein the first node is associated with a primary cell (PCell) of a terminal, and the second node is associated with one or more candidate primary and secondary cells (PSCells) of the terminal.

46. A communication system, comprising a first network device and a second network device, wherein the first network device is configured to implement the method for processing information according to any one of claims 1 to 22, and the second network device is configured to implement the method for processing information according to any one of claims 23 to 42.

47. A communication device, comprising:
one or more processors;
wherein the one or more processors are configured to invoke instructions to cause the communication device to execute the method for processing information according to any one of claims 1 to 22 or claims 23 to 42.

48. A storage medium storing instructions which, when run on a communication device, cause the communication device to execute the method for processing information according to any one of claims 1 to 22 or claims 23 to 42.
